# EUROPÄISCHE PATENTSCHRIFT

(11) **EP 2 255 120 B1**
(45) Veröffentlichungstag und Bekanntmachung des Hinweises auf die Patenterteilung: **20.06.2012**
(21) Anmeldenummer: 09718789.2
(22) Anmeldetag: 18.02.2009
(51) Int. Cl.: F16L 37/098

(54) **KUPPLUNG FÜR EINE FLUIDLEITUNG**
COUPLING FOR A FLUID LINE
ACCOUPLEMENT POUR UNE CONDUITE DE FLUIDE

(30) Priorität: 13.03.2008 DE 102008014255; 05.12.2008 DE 202008016177 U
(43) Veröffentlichungstag der Anmeldung: 01.12.2010
(73) Patentinhaber: A. Raymond et Cie., 38000 Grenoble (FR)
(72) Erfinder: KÜCK, Heinz, 70437 Stuttgart (DE); BÜLAU, André, 70372 Stuttgart (DE); MAYER, Volker, 73098 Rechberghausen (DE); SCHOBER, Marc, 71034 Böblingen (DE); KURTH, Martin, 79400 Kandern (DE)
(74) Vertreter: Rüttgers, Joachim
(86) Internationale Anmeldenummer: PCT/EP2009/001143
(87) Internationale Veröffentlichungsnummer: WO 2009/112144

(56) Entgegenhaltungen:
- DE-A1- 3 914 132
- US-A1- 2005 063 125
- US-A1- 2007 209 716

## Beschreibung

Die Erfindung betrifft eine Kupplung für eine Fluidleitung gemäß dem Oberbegriff des Patentanspruches 1.

Eine derartige Kupplung für eine Fluidleitung ist aus US 200510063125 A1 bekannt. Die vorbekannte Kupplung verfügt über ein Einsteckteil und über ein Aufnahmeteil, das zum Aufnehmen und Verriegeln des Einsteckteiles in einer Schließstellung eingerichtet ist. Weiterhin ist ein mit dem Aufnahmeteil verbundener elektrischer Schwingkreis vorhanden, der in der Schließstellung des Einsteckteiles bei Beaufschlagen mit elektromagnetischer Energie zum Schwingen mit einer bestimmten, einer Schließkennfrequenz entsprechenden Resonanzfrequenz eingerichtet ist. In der Schließstellung werden hierfür durch entsprechendes Einwirken des Einsteckteiles elektrische Kontakte des Schwingkreises geschlossen, um ein Schwingen des Schwingkreises zu ermöglichen. Befindet sich bei der vorbekannten Kupplung das Einsteckteil jedoch nicht in der Schließstellung, so ist der Schwingkreis geöffnet und kann nicht zum Schwingen angeregt werden. Somit lässt sich bei Beaufschlagen des Schwingkreises mit elektromagnetischer Energie mit einer auf die Resonanzfrequenz angepasste Anregungsfrequenz der Zustand der Kupplung, das heißt, ob das Einsteckteil in der Schließstellung ist oder nicht, dadurch überprüfen, ob der Schwingkreis ein elektromagnetisches Erregerfeld auf seiner Resonanzfrequenz maximal dämpft. Auch wenn sich bei der vorbekannten Kupplung ohne visuelle oder haptische Überprüfung feststellen lässt, ob sich das Einsteckteil in der Schließstellung befindet oder nicht, ist für entsprechend zuverlässige Detektionssignale allerdings erforderlich, dass das mechanische Schließen der Kontakte zuverlässig erfolgt.

Der Erfindung liegt die Aufgabe zugrunde, eine Kupplung für eine Fluidleitung der eingangs genannten Art anzugeben, bei der einer Anordnung des Einsteckteiles in der Schließstellung unabhängig von einem Schließen elektrischer Kontakte detektierbar ist.

Diese Aufgabe wird bei einer Kupplung für eine Fluidleitung der eingangs genannten Art erfindungsgemäß mit den kennzeichnenden Merkmalen des Patentanspruches 1 gelöst.

Dadurch, dass bei der erfindungsgemäßen Kupplung für eine Fluidleitung der Schwingkreis permanent geschlossen ist und über eine kontaktfrei mit dem Schwingkreis sowie mechanisch mit dem Einsteckteil zusammenwirkende Abstimmeinrichtung die Resonanzfrequenz des Schwingkreises dahingehend beeinflussbar ist, dass der Schwingkreis bei einer Anordnung des Einsteckteiles in einer von der Schließstellung abweichenden Zwischenstellung eine von der Schließkennfrequenz abweichende Resonanzfrequenz aufweist, lässt sich aufgrund der Frequenzlage der maximalen Dämpfung eines elektromagnetischen Erregerfeldes erkennen, ob sich das Einsteckteil in der Schließstellung befindet oder nicht.

Bei einem Ausführungstyp der Erfindung wirkt die Abstimmeinrichtung auf die Kapazität des elektrischen Schwingkreises ein.

Bei einem anderen Ausführungstyp der Erfindung wirkt die Abstimmeinrichtung auf die Induktivität des elektrischen Schwingkreises ein.

Bei einem noch weiteren Ausführungstyp der Erfindung wirkt die Abstimmeinrichtung sowohl auf die Kapazität als auch auf die Induktivität des elektrischen Schwingkreises ein.

Bei den wenigstens auf die Kapazität einwirkenden Ausführungstypen ist zweckmäßigerweise ein mechanisch mit dem Einsteckteil gekoppeltes Dielektrikum vorhanden, das in der Schließstellung die Kapazität des elektrischen Schwingkreises gegenüber der Kapazität in den Zwischenstellungen sprunghaft erhöht.

Bei den auf wenigstens die Induktivität einwirkenden Ausführungstypen verfügt die Abstimmeinrichtung über ein mit dem Einsteckteil gekoppeltes Permeabilitätselement, das in der Schließstellung des Einsteckteiles die Induktivität des elektrischen Schwingkreises gegenüber den Zwischenstellungen sprunghaft erhöht.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung von Ausführungsbeispielen der Erfindung mit Bezug auf die Figuren der Zeichnung. Es zeigen:
- Fig. 1: in einer perspektivischen Explosionsansicht ein erstes Ausführungsbeispiel einer erfindungsgemäßen Kupplung mit einem Einsteckteil und mit einem Aufnahmeteil,
- Fig. 2: das Ausführungsbeispiel gemäß Fig. 1 in einem Längsschnitt in einer geöffneten Stellung,
- Fig. 3: in einer Seitenansicht eine Dielektrikumträgerscheibe des Ausführungsbeispiels gemäß Fig. 1,
- Fig. 4: eine Stirnansicht auf das Aufnahmeteil des Ausführungsbeispiels gemäß Fig. 1,
- Fig. 5: in einer perspektivischen detaillierten Darstellung die Kontaktierung einer Spule bei dem Ausführungsbeispiel gemäß Fig. 1,
- Fig. 6: in einer ausschnittsweisen Schnittansicht das Anordnen von Anschlussleitungen in dem Aufnahmeteil bei dem Ausführungsbeispiel gemäß Fig. 1,
- Fig. 7: in einem Längsschnitt das Ausführungsbeispiel gemäß Fig. 1 mit dem Einsteckteil in der Schließstellung,
- Fig. 8: in einer perspektivischen Explosionsansicht ein zweites Ausführungsbeispiel einer efindungsgemäßen Kupplung mit einem Einsteckteil, mit einem Aufnahmeteil und mit einem Kondensatorhalter als separatem, mit dem Aufnahmeteil verbindbaren Bauelement,
- Fig. 9: in einem Längsschnitt das Ausführungsbeispiel gemäß Fig. 8 mit einem an das Aufnahmeteil angebrachten Kondensatorhalter,
- Fig. 10: in einem Schnitt eine Dielektrikumträgerscheibe des Ausführungsbeispiels gemäß Fig. 8,
- Fig. 11: in einer perspektivischen detaillierten Ansicht die Kontaktierung der Spule bei dem Ausführungsbeispiel gemäß Fig. 8,
- Fig. 12: in einer Schnittansicht die Kontaktierung in der Spule bei dem Ausführungsbeispiel gemäß Fig. 8,
- Fig. 13: in einem Längsschnitt das Ausführungsbeispiel gemäß Fig. 8 mit dem Einsteckteil in der Schließstellung,
- Fig. 14: in einer perspektivischen Explosionsansicht ein drittes Ausführungsbeispiel einer erfindungsgemäßen Kupplung mit einem Aufnahmeteil, mit einem Einsteckteil, mit einem auf das Aufnahmeteil aufsteckbaren, separaten Kondensatorhalter sowie mit einem auf das Aufnahmeteil aufsteckbaren, separaten Spulenkörper,
- Fig. 15: in einer perspektivischen Ansicht den Spulenkörper bei dem Ausführungsbeispiel gemäß Fig. 14,
- Fig. 16: in einer perspektivischen detaillierten Ansicht die Kontaktierung der Spule bei dem Ausführungsbeispiel gemäß Fig. 14,
- Fig. 17: in einer detaillierten Schnittansicht die Kontaktierung der Spule bei dem Ausführungsbeispiel gemäß Fig. 14,
- Fig. 18: in einem Längsschnitt das Ausführungsbeispiel gemäß Fig. 14 mit dem Einsteckteil in einer Schließstellung,
- Fig. 19: in einer perspektivischen Explosionsansicht ein viertes Ausführungsbeispiel einer erfindungsgemäßen Kupplung mit einem Aufnahmeteil, mit einem Einsteckteil und mit einem auf das Aufnahmeteil aufsteckbaren Schwingkreisträger,
- Fig. 20: eine Stirnansicht auf den Schwingkreisträger bei dem Ausführungsbeispiel gemäß Fig. 19,
- Fig. 21: in einem Längsschnitt das Ausführungsbeispiel gemäß Fig. 19 mit dem Einsteckteil in der Schließstellung,
- Fig. 22: in einer perspektivischen Explosionsansicht ein fünftes Ausführungsbeispiel einer erfindungsgemäßen Kupplung mit einem Aufnahmeteil, mit einem Einsteckteil und mit einer Spulenkemeinheit,
- Fig. 23: in einer perspektivischen Explosionsansicht die Spulenkemeinheit des Ausführungsbeispieles gemäß Fig. 22,
- Fig. 24: das Ausführungsbeispiel gemäß Fig. 22 mit einer in das Aufnahmeteil eingefügten Spulenkemeinheit und mit dem Einsteckteil vor Einfügen in das Aufnahmeteil,
- Fig. 25: in einem Längsschnitt das Ausführungsbeispiel gemäß Fig. 22 mit dem Einsteckteil in der Schließstellung,
- Fig. 26: in einer perspektivischen Explosionsansicht ein sechstes Ausführungsbeispiel einer erfindungsgemäßen Kupplung mit einem Aufnahmeteil, mit einem Einsteckteil, mit einer Dielektrikumträgerscheibe sowie mit einer Spulenkemeinheit,
- Fig. 27: in einem Längsschnitt das Ausführungsbeispiel gemäß Fig. 26 mit dem Einsteckteil in der Schließstellung und
- Fig. 28: in einem Blockschaubild eine Schaltungsanordnung zum Beaufschlagen einer erfindungsgemäßen Kupplung mit elektromagnetischer Energie in Gestalt eines Erregerfeldes sowie zum Detektieren und Verarbeiten der von erfindungsgemäßen Kupplungen hervorgerufenen Dämpfungen des Erregerfeldes.

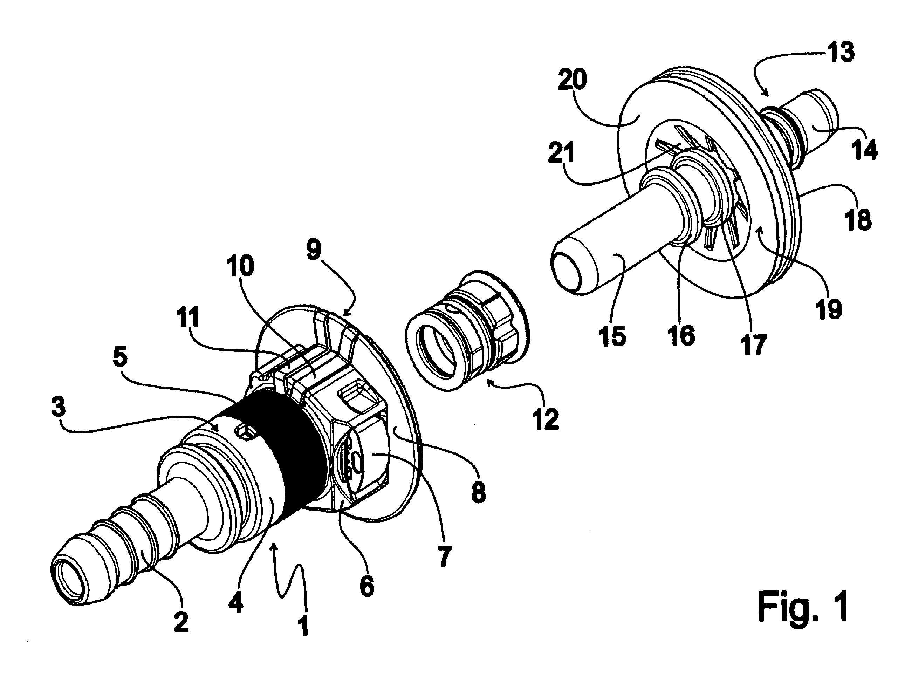

Fig. 1 zeigt in einer perspektivischen Explosionsansicht ein erstes Ausführungsbeispiel einer erfindungsgemäßen Kupplung für eine in Fig. 1 nicht dargestellte Fluidleitung. Das Ausführungsbeispiel gemäß Fig. 1 verfügt über ein längliches Aufnahmeteil 1, das an einem rückseitigen Ende zum Verbinden mit einem Ende der Fluidleitung mit einem Anschlussstutzen 2 ausgebildet ist. Das Aufnahmeteil 1 weist weiterhin einen im Durchmesser gegenüber dem Anschlussstutzen 2 größeren Aufnahmeabschnitt 3 auf, der in seinem an den Anschlussstutzen 2 angrenzenden Bereich eine zylinderförmige glatte Wickelwand 4 aufweist, auf die eine aus einem relativ dünnen Spulendraht gewickelte Spule 5 als Induktivität eines elektrischen Schwingkreises aufgebracht ist.

An dem von dem Anschlussstutzen 2 abgewandten Ende des Aufnahmeabschnittes 3 ist das Aufnahmeteil 1 mit einem im Querschnitt gegenüber der Wickelwand 4 weiter vergrößerten Haltefederaufnahmekörper 6 ausgebildet, der zum Aufnehmen einer ringförmig geschlossenen Haltefeder 7 ausgebildet ist. Weiterhin ist das Aufnahmeteil 1 an seinem dem Anschlussstutzen 2 abgewandten stimseitigen Ende mit einer radial nach außen über den Haltefederaufnahmekörper 6 vorstehenden Kondensatorträgerplatte 8 ausgebildet, auf deren von dem Aufnahmeabschnitt 3 abgewandten Stirnseite Ringelektroden eines die Kapazität des Schwingkreises bildenden Kondensators 9 angeordnet sind. Bei dem ersten Ausführungsbeispiel gemäß Fig. 1 verfügt der Kondensator 9 über zwei Ringelektroden, die über eine erste Anschlussleitung 10 beziehungsweise über eine zweite Anschlussleitung 11 jeweils mit einem Anschlussende der Spule 5 verbunden sind.

Weiterhin verfügt die erfindungsgemäße Kupplung gemäß dem ersten Ausführungsbeispiel von Fig. 1 über eine Dichtungseinheit 12, die in den Aufnahmeabschnitt 3 des Aufnahmeteiles 1 einfügbar ist.

Die Kupplung gemäß dem Ausführungsbeispiel von Fig. 1 umfasst weiterhin ein längliches Einsteckteil 13, das an einem rückseitigen Ende mit einem Anschlussstutzen 14 zum Verbinden mit einem weiteren Ende der in Fig. 1 nicht dargestellten Fluidleitung ausgebildet ist. An dem dem Anschlussstutzen 14 gegenüberliegenden Bereich des Einsteckteiles 13 ist ein Einsteckschaft 15 mit einer glatten zylindrischen Außenwand ausgebildet, dessen Länge in etwa der Länge des Aufnahmeabschnittes 3 des Aufnahmeteiles 1 entspricht. Weiterhin ist das Einsteckteil 13 mit einem radial über den Einsteckschaft 15 überstehenden umlaufenden Rastbund 16 ausgebildet, der in einem Abstand von dem freien Ende des Einsteckschaftes 15 angeordnet ist. Weiterhin ist zwischen dem Rastbund 16 und dem Anschlussstutzen 14 ein ebenfalls radial über den Einsteckschaft 15 überstehender, ringförmig umlaufender Haltebund 17 ausgebildet, der in einem Abstand von einer Gegenplatte 18 angeordnet ist, die auf der dem Rastbund 16 abgewandten Seite des Haltebundes 17 angeordnet ist. Die Gegenplatte 18 weist in radialer Richtung Dimensionen auf, die im Wesentlichen den entsprechenden Abmessungen der Kondensatorträgerplatte 8 entsprechen.

Die erfindungsgemäße Kupplung gemäß dem in Fig. 1 dargestellten ersten Ausführungsbeispiel ist weiterhin mit einer Dielektrikumträgerscheibe 19 als Element einer Abstimmeinrichtung ausgebildet, die in radialer Richtung Dimensionen aufweist, die den entsprechenden Abmessungen der Gegenplatte 18 entsprechen und die eine verhältnismäßig hohe Dielektrizitätskonstante aufweist. Die Dielektrikumträgerscheibe 19 ist mit einer radial außen liegenden ringförmigen Flachseite 20 ausgebildet. Weiterhin verfügt die Dielektrikumträgerscheibe 19 über an der radialen Innenseite der Flachseite 20 angesetzte innere Vorspannzungen 21, die in der Anordnung gemäß Fig. 1 zwischen dem Haltebund 17 und der Gegenplatte 18 angeordnet sind.

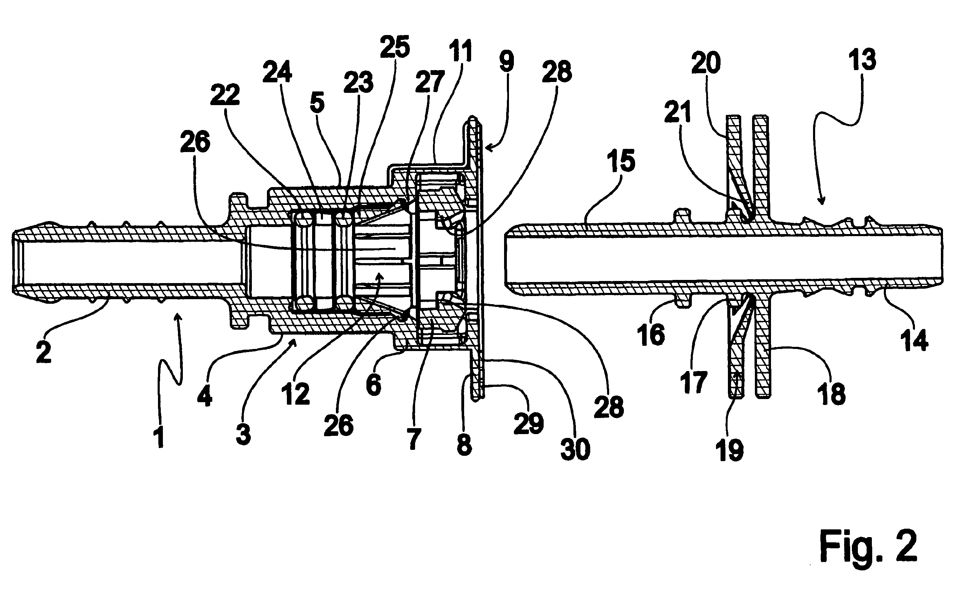

Fig. 2 zeigt in einem Längsschnitt das erste Ausführungsbeispiel gemäß Fig. 1 mit einer in den Aufnahmeabschnitt 3 des Aufnahmeteils eingefügten Dichtungseinheit 12 sowie mit dem Einsteckteil 13 in einer Zwischenstellung, hier in einem größeren Abstand von dem Aufnahmeteil 1. Aus Fig. 2 ist ersichtlich, dass die Dichtungseinheit über einen ersten Dichtungsring 22, über einen zweiten Dichtungsring 23, über einen zwischen dem ersten Dichtungsrings 22 und dem zweiten Dichtungsring 23 angeordneten Zwischenring 24 sowie über einen Rastring 25 mit einer Anzahl von radial nach außen federnden Rastarmen 26 verfügt, die einen in dem Aufnahmeabschnitt 3 ausgebildeten, radial nach innen vorstehenden Sicherungsbund 27 hintergreifen, um die Dichtungsringe 22, 23 sowie den Zwischenring 24 in dem Aufnahmeteil zu fixieren.

Weiterhin lässt sich der Darstellung von Fig. 2 entnehmen, dass die Haltefeder 7 über eine Anzahl von radial nach innen vorstehenden Hinterrastzungen 28 verfügt, die zum Hintergreifen des an dem Einsteckteil 13 ausgebildeten Rastbundes 16 eingerichtet sind.

An der Kondensatorträgerplatte 8 sind bei dem Ausführungsbeispiel gemäß Fig. 1 zum Ausbilden des Kondensators 9 als die eine Ringelektrode eine äußere, ringförmig ausgebildete Kondensatorringelektrode 29 und als die zweite Ringelektrode eine konzentrisch in radialer Richtung innerhalb der äußeren Kondensatorringelektrode 29 liegende innere Kondensatorringelektrode 30 angeordnet. Die Kondensatorringelektroden 29, 30 liegen in einer Ebene.

Wie aus Fig. 2 ersichtlich ist, wird die Dielektrikumträgerscheibe 19 durch das Eingreifen der Vorspannzungen 21 in den zwischen dem Haltebund 17 und der Gegenplatte 18 ausgebildeten Zwischenraum auf dem Einsteckteil 13 verliersicher gehalten.

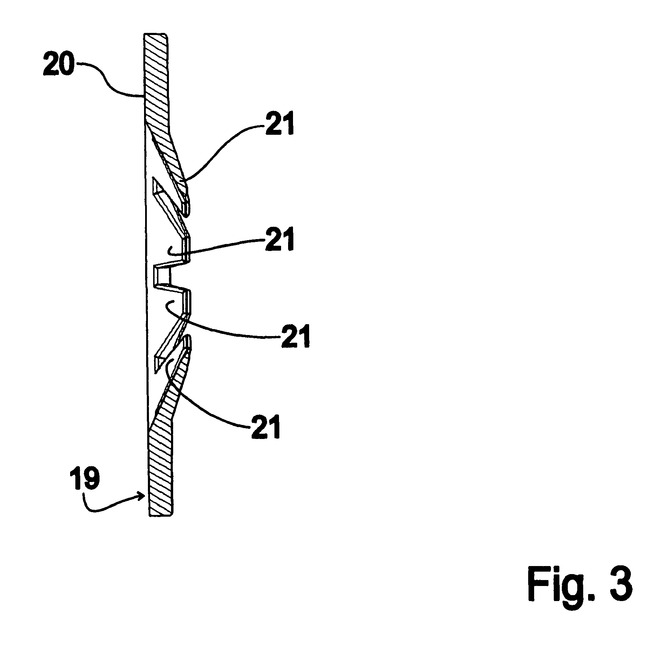

Fig. 3 zeigt die Dielektrikumträgerscheibe 19 in einer Schnittansicht im Durchmesser. Aus Fig. 3 lässt sich erkennen, dass die Vorspannzungen 21 gegenüber der Flachseite 20 abgewinkelt und von der Flachseite 20 weg weisend radial nach innen laufen. Die Biegesteifigkeit der Vorspannzungen 21 ist so eingerichtet, dass bei Aufschieben der Dielektrikumträgerscheibe 19 auf das Aufnahmeteil 1 der in einem zum weitgehend spielfreien Fixieren der Dielektrikumträgerscheibe 19 in einem nicht zu großen Abstand von der Gegenplatte 18 angeordneten Haltebund 17 überstreichen und in den zwischen dem Haltebund 17 sowie der Gegenplatte 187 ausgebildeten Zwischenraum eingreifen.

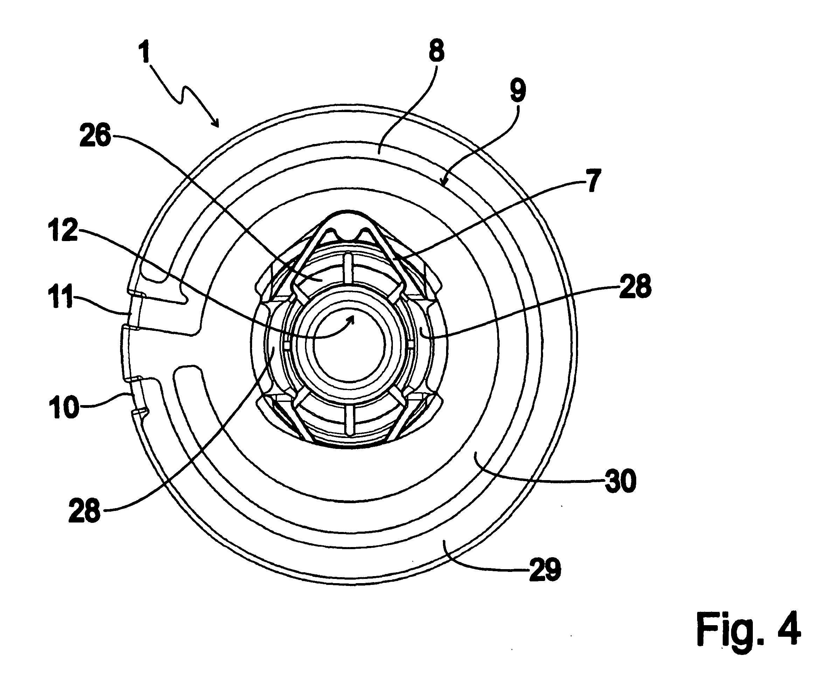

Fig. 4 zeigt das Aufnahmeteil 1 in einer Stirnansicht auf die Kondensatorträgerplatte 8 und den auf ihr angebrachten Kondensator 9. Aus der Darstellung gemäß Fig. 4 ist ersichtlich, dass sich die äußere Kondensatorringelektrode 29 von der ersten Anschlussleitung 10 ringförmig am äußeren Rand der Kondensatorträgerplatte 8 erstreckt und in einem Abstand von der ersten Anschlussleitung 10 endet. Die innere Kondensatorringelektrode 30, die an der zwischen der ersten Anschlussleitung 10 und dem Ende der äußeren Kondensatorringelektrode 29 liegenden zweiten Anschlussleitung 11 angeschlossen ist, erstreckt sich radial innenseitig der äußeren Kondensatorringelektrode 29 und endet ebenfalls in einem Abstand von der zweiten Anschlussleitung 11, mit der sie verbunden ist. Somit bildet sich bei Anliegen einer Spannung zwischen den in einer Ebene liegenden Kondensatorringelektroden 29, 30 ein elektrisches Feld aus, das sich aus der Ebene der Kondensatorträgerplatte 8 heraus erstreckt und insbesondere mit Feldkomponenten über die Stirnseite der Kondensatorträgerplatte 8 vorsteht. Durch die Inhomogenität des bei Anlegen einer elektrischen Spannung zwischen den Kondensatorringelektroden 29, 30 ausgebildeten elektrischen Feldes in Längsrichtung nimmt die Felddichte bei Annäherung an den Kondensator 9 überproportional zu.

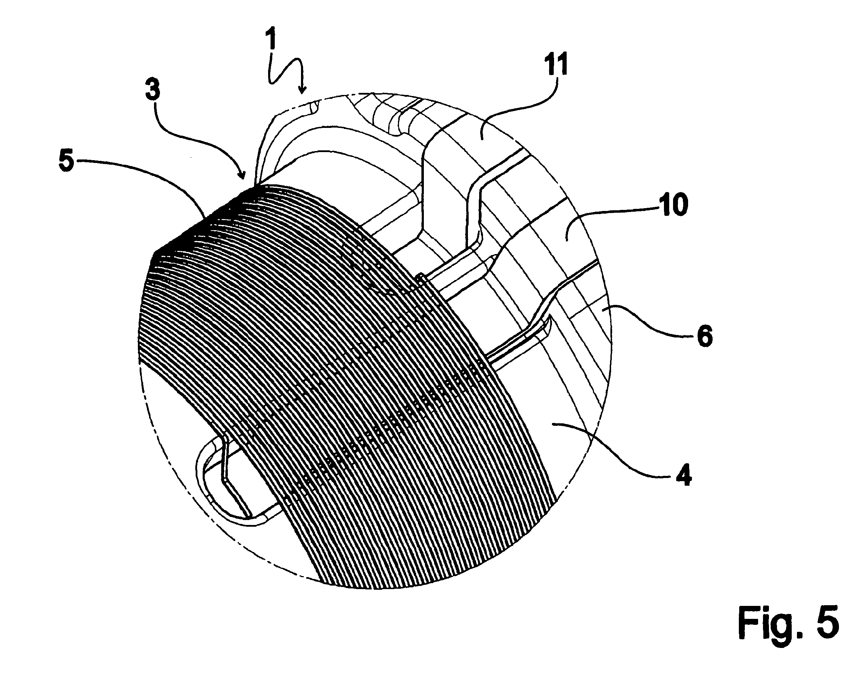

Fig. 5 zeigt in einer perspektivischen Detailansicht die Spule 5 sowie die Anschlussleitungen 10, 11 im Übergangsbereich zwischen der Wickelwand 4 und dem Haltefederaufnahmekörper 6. Aus Fig. 5 ist ersichtlich, dass die Anschlussleitungen 10, 11 in den in dem Aufnahmeabschnitt 3 ausgebildeten Vertiefungen angeordnet und mit jeweils einem Ende der aus einer Vielzahl von Windungen bestehenden Spule 5 kontaktiert sind. Somit bilden die Spule 5 und der Kondensator 9 einen permanent geschlossenen elektrischen Schwingkreis.

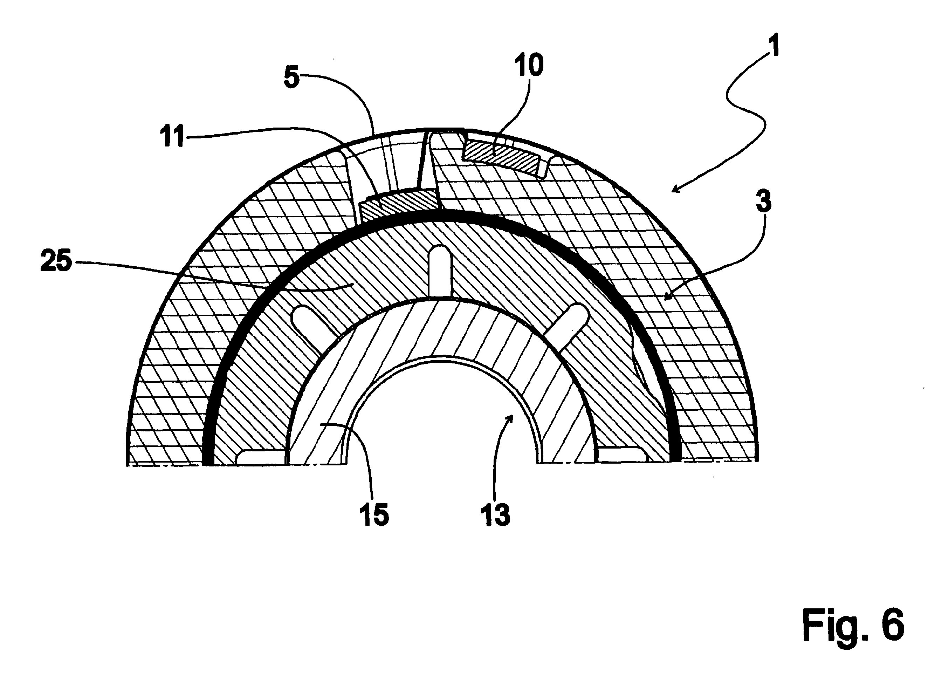

Fig. 6 zeigt einen Querschnitt durch das Aufnahmeteil 1 im Bereich der Spule 5 sowie der mit der Spule 5 verbundenen Enden der Anschlussleitungen 10, 11 mit Blick in Richtung des Rastringes 25, wobei in der Darstellung gemäß Fig. 6 der Einsteckschaft 15 des Einsteckteiles 13 in dem Aufnahmeabschnitt 3 angeordnet ist. Aus Fig. 6 ist ersichtlich, dass die Anschlussleitungen 10, 11 in einem radialen Abstand von der Spule 5 angeordnet sind, um eine Kontaktierung der Spule 5 sicher auszuschließen, und die elektrische Verbindung zwischen den Enden der Spule 5 sowie den Anschlussleitungen 10, 11 in einem automatisierten Verfahren zu vereinfachen.

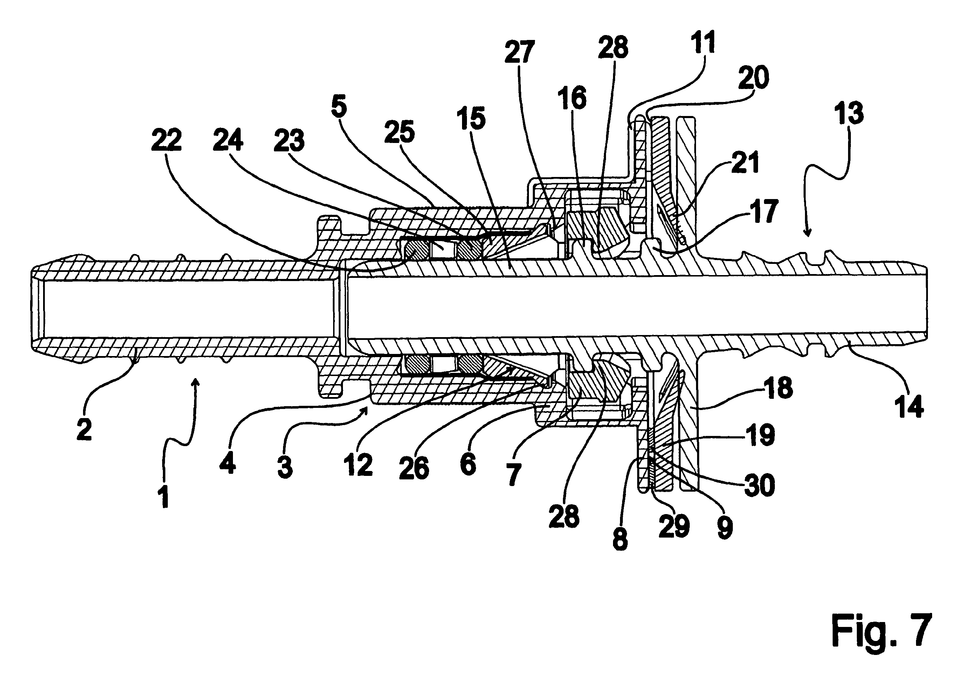

Fig. 7 zeigt in einem Längsschnitt das erste Ausführungsbeispiel einer erfindungsgemäßen Kupplung gemäß Fig. 1 in einer Anordnung, in der das Einsteckteil 13 in einer Schließstellung in dem Aufnahmeteil 1 angeordnet und durch Hintergreifen des Rastbundes 16 durch die Hinterrastzungen 28 der Haltefeder 7 fixiert ist. In der Schließstellung, die durch Überfahren der Hinterrastzungen 28 durch den Rastbund 16 einschließlich eines für ein zuverlässiges Hinterrasten erforderlichen Überweges eingenommen worden ist, liegt die Dielektrikumträgerscheibe 19 mit einer durch die Vorspannzungen 21 erzeugten Vorspannung mit ihrer Flachseite 20 bündig an den Kondensatorringelektroden 29, 30 des Kondensators 9 an, so dass dessen Kapazität durch das Einbringen eines Dielektrikum in das zwischen den Kondensatorringelektroden 29, 30 ausgebildete, in Längsrichtung inhomogene elektrische Feld sprunghaft gegenüber der Kapazität in einer Zwischenstellung des Einsteckteiles 13 erhöht ist, in der die Dielektrikumträgerscheibe 19 einen Abstand von den Kondensatorringelektroden 29, 30 aufweist.

Dabei sind die Dimensionen und die Materialeigenschaften der Vorspannzungen 21 sowie der Abstand zwischen der der Gegenplatte 8 zugewandten Hintergriffseite des Rastbundes 16 und der dem Rastbund 16 zugewandten Abstützseite der Gegenplatte 18 so eingerichtet, dass in der Schließstellung die Dielektrikumträgerscheibe 19 im Rahmen der fertigungsüblichen Toleranzen mit einer unteren Minimalandruckkraft gerade noch an die Kondensatorringelektroden 19, 20 angedrückt wird, um bereits bei einer verhältnismäßig geringfügig von der Schließstellung beabstandeten Zwischenstellung des Einsteckteiles 13 ebenfalls einen Abstand zwischen der Flachseite 20 der Dielektrikumträgerscheibe 19 und den Kondensatorringelektroden 29, 30 zu schaffen, was gegenüber einer luftspaltfreien Anlage zu einer sprungartig geringeren Kapazität des Kondensators 9 führt. Dadurch ist in der Schließstellung des Einsteckteiles 13 die Kapazität des Kondensators 9 maximal, und die Resonanzfrequenz des elektrischen Schwingkreises ist auf die Schließkennfrequenz abgestimmt.

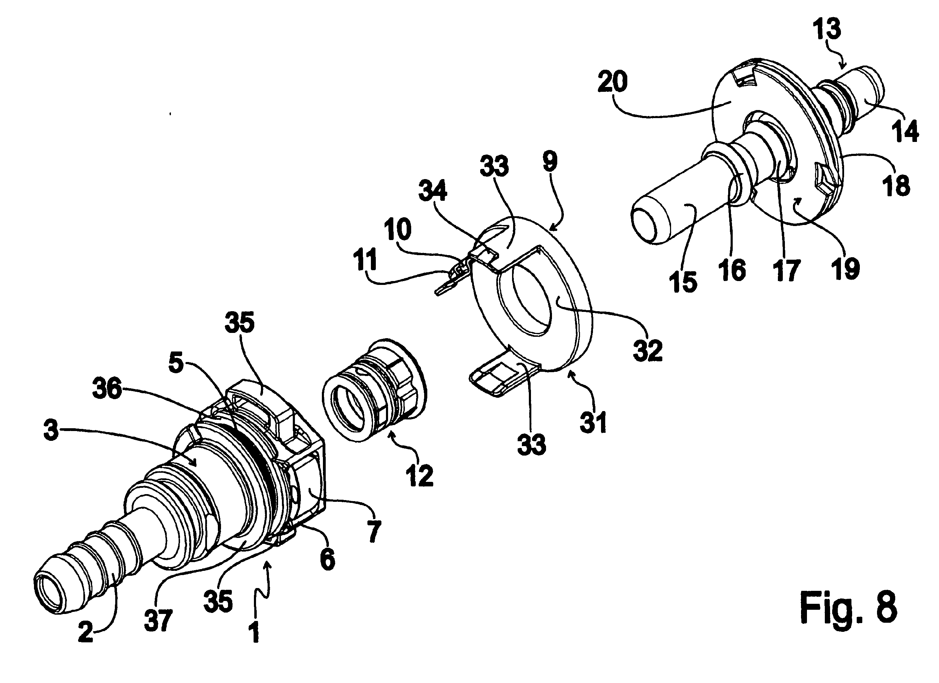

Fig. 8 zeigt in einer perspektivischen Explosionsansicht ein zweites Ausführungsbeispiel einer erfindungsgemäßen Kupplung für eine in Fig. 2 nicht dargestellte Fluidleitung. Dabei sei angemerkt, dass sich bei dem ersten Ausführungsbeispiel gemäß Fig. 1 bis Fig. 7 und bei dem zweiten Ausführungsbeispiel einander entsprechende Elemente mit dem gleichen Bezugszeichen versehen und zum Vermeiden von Wiederholungen im weiteren nicht näher erläutert sind. Das Ausführungsbeispiel gemäß Fig. 8 verfügt über einen Kondensatorhalter 31 als separates Bauteil, der mit einer flachen Ringscheibe 32 ausgebildet ist, die über eine mittige Ausnehmung zum Durchführen des Einsteckschaftes 15 des Aufnahmeteiles 13 verfügt und auf einer rechtwinklig zur Längsrichtung der Kupplung ausgerichteten Flachseite mit dem Kondensator 9 eines elektrischen Schwingkreises belegt ist.

Auf der dem Kondensator 9 abgewandten Seite sind zwei diametral einander gegenüberliegende Einschiebezungen 33 angeformt, an deren der Ringscheibe 32 abgewandten freien Enden jeweils eine radial nach außen vorstehende Rastnase 34 ausgebildet ist. Weiterhin lässt sich Fig. 8 entnehmen, dass an dem Haltefederaufnahmekörper 6 des Aufnahmeteiles 1 zwei diametral einander gegenüberliegende Haltebügel 35 vorhanden sind, die brückenartig radial nach außen über den Haltefederaufnahmekörper 6 überstehen und so dimensioniert sind, dass sie bei Aufstecken des Kondensatorhalters 31 auf das Aufnahmeteil 1 die Einschiebezungen 33 bündig umschließen.

Weiterhin ist bei dem zweiten Ausführungsbeispiel gemäß Fig. 8 die Spule 5 in einer durch zwei Randbünde 36, 37 begrenzte Aufnahmenut aufgewickelt, die benachbart des Haltefederaufnahmekörpers 6 angeordnet ist.

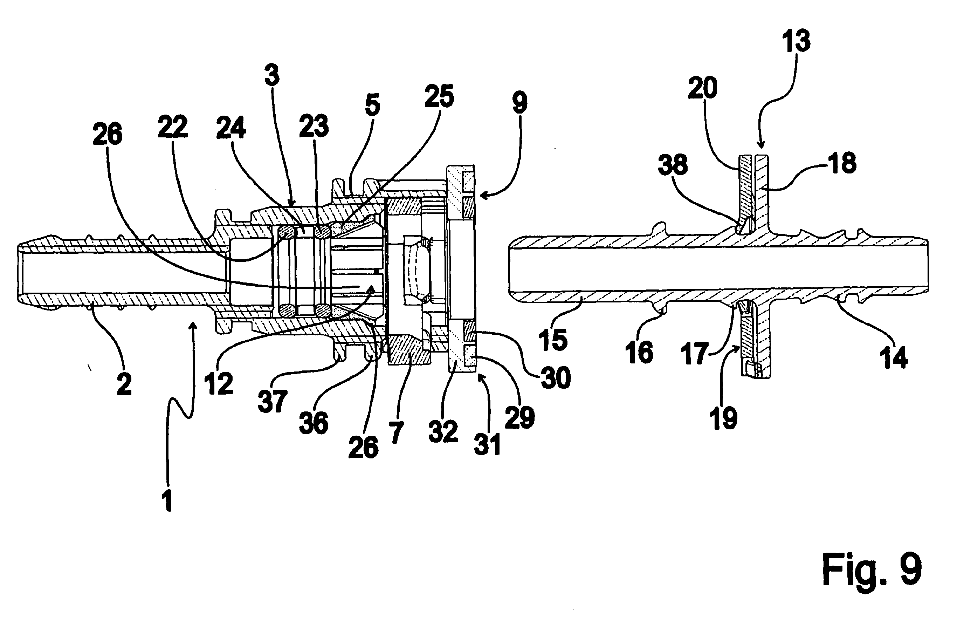

Fig. 9 zeigt in einem Längsschnitt das Ausführungsbeispiel gemäß Fig. 8 mit einem auf das Aufnahmeteil 1 aufgesteckten Kondensatorhalter 31. Bei dem zweiten Ausführungsbeispiel sind die Kondensatorringelektroden 29, 30 in Längsrichtung der Kupplung verhältnismäßig massiv ausgeführt und in entsprechend den Kondensatorringelektroden 29, 30 ausgebildete Elektrodeaufnahmenuten eingelassen. Dadurch ist der Kondensator 9 gegenüber mechanischen Belastungen sehr widerstandsfähig.

Weiterhin lässt sich der Darstellung gemäß Fig. 9 entnehmen, dass bei dem zweiten Ausführungsbeispiel die Dielektrikumträgerscheibe 19 mit verhältnismäßig biegesteifen Gegendruckzungen 38 ausgebildet ist, die bei bestimmungsgemäßer Anordnung der Dielektrikumträgerscheibe 19 gemäß dem zweiten Ausführungsbeispiel von der Gegenplatte 18 wegweisend ausgerichtet sind und an der der Gegenplatte 18 zugewandten Hinterrastseite des Haltebundes 17 anliegen. Dadurch ist die Dielektrikumträgerscheibe 19 bis auf in der Regel zerstörende Gewaltanwendung fest mit dem Einsteckteil 13 verbunden.

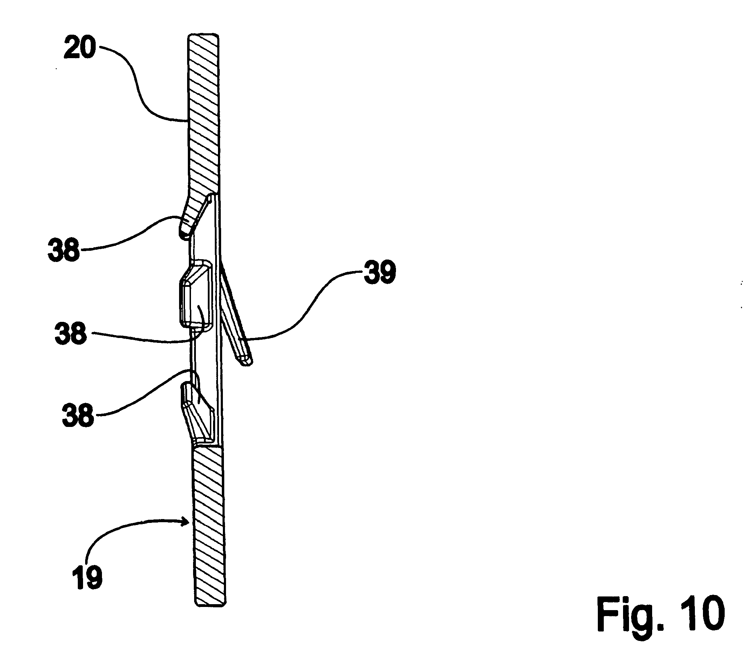

Fig. 10 zeigt in einem Querschnitt die Dielektrikumträgerscheibe 19 des zweiten Ausführungsbeispiels gemäß Fig. 8. Die Dielektrikumträgerscheibe 19 verfügt bei dem zweiten Ausführungsbeispiel über eine Anzahl von radial außenseitig angeordneten und in die von den Gegendruckzungen 38 weg weisende Richtung angestellten äußeren Vorspannzungen 39.

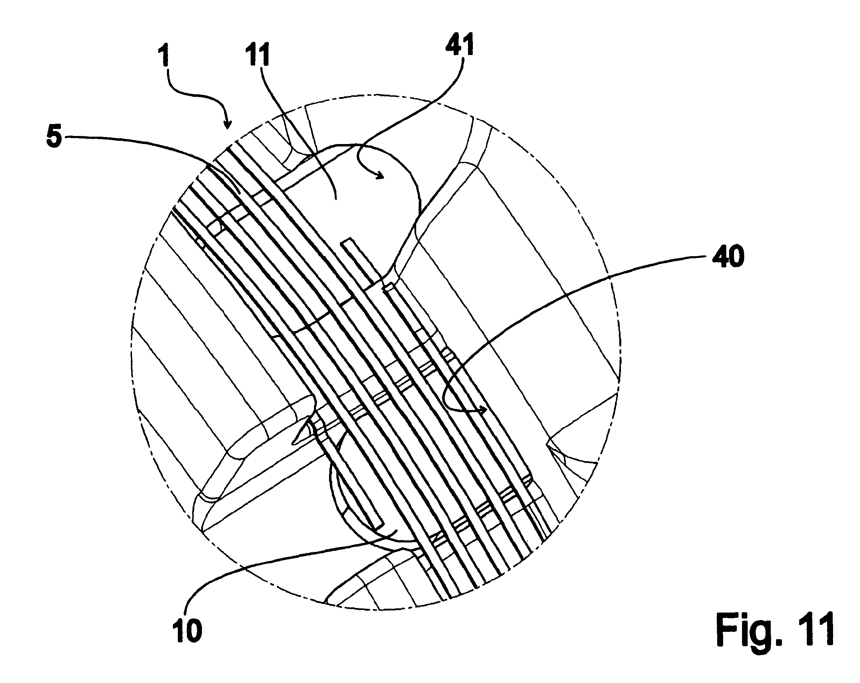

Fig. 11 zeigt in einer vergrößerten perspektivischen Detailansicht das Aufnahmeteil 1 des zweiten Ausführungsbeispieles im Bereich der Randbünde 36, 37 mit den Leitungsenden der Spule 5. Aus Fig. 11 ist ersichtlich, dass die Anschlussleitungen 10, 11 jeweils durch eine in dem Haltefederaufnahmekörper 6 ausgebildete Leitungsausnehmung 40, 41 durchtreten und radial innenseitig der Spule 5 enden. Zum Herstellen eines permanent geschlossenen elektrischen Schwingkreises ist jedes Leitungsende der Spule 5 mit einer Anschlussleitung 10, 11 kontaktiert.

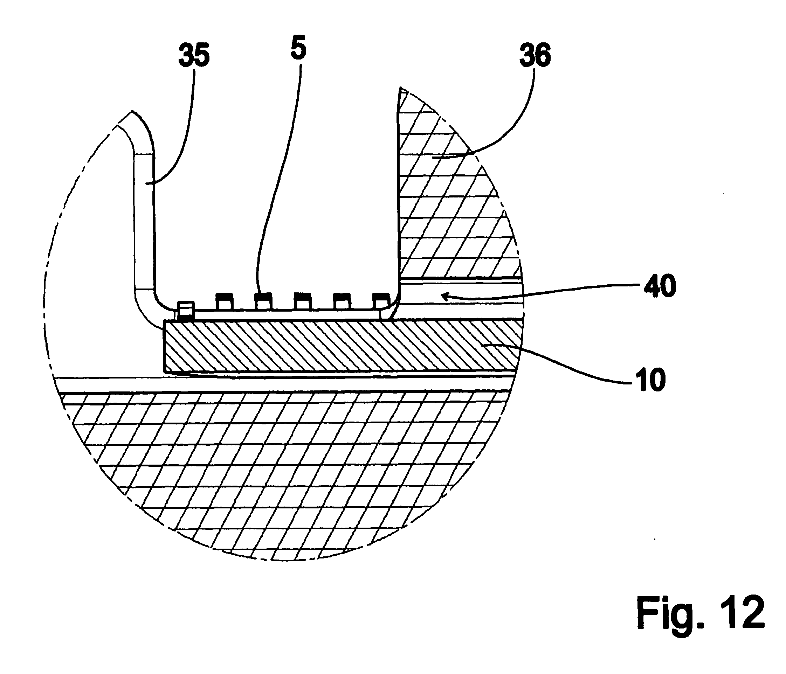

Fig. 12 zeigt in einer vergrößerten Schnittansicht das Kontaktieren der in einer Leitungsausnehmung 40 angeordneten ersten Anschlussleitung 10. Aus Fig. 12 ist weiterhin ersichtlich, dass die erste Anschlussleitung 10 und entsprechend auch die zweite Anschlussleitung 11 in radialer Richtung in einem Abstand von der Spule 5 angeordnet sind.

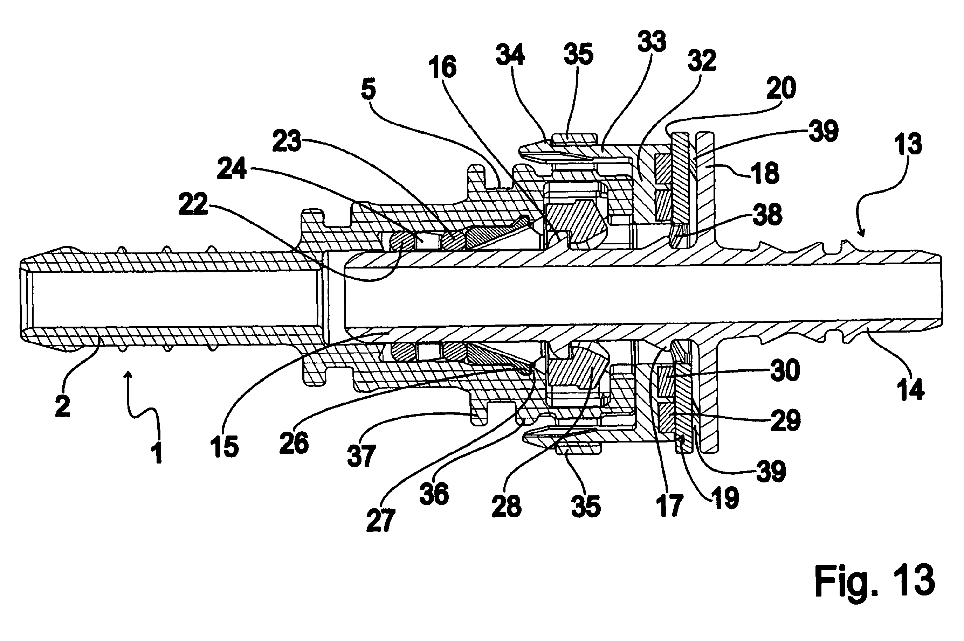

Fig. 13 zeigt in einem Längsschnitt das zweite Ausführungsbeispiel gemäß Fig. 8 in der mit dem Aufnahmeteil 1 verriegelten Schließstellung des Einsteckteiles 13. Aus Fig. 13 ist ersichtlich, dass beim Anliegen der Ringscheibe 32 an dem Haltefederaufnahmekörper 6 die an den Einschiebezungen 33 ausgebildeten Rastnasen 34 die Haltebügel 35 hintergreifen, so dass der Kondensatorhalter 31 fest an dem Aufnahmeteil 1 angebracht ist. Weiterhin lässt sich der Darstellung gemäß Fig. 13 entnehmen, dass in der Schließstellung des Einsteckteiles 13 die äußeren Vorspannzungen 39 an der dem Aufnahmeteil 1 zugewandten Seite der Gegenplatte 18 anliegen und die Dielektrikumträgerscheibe 19 mit einer Vorspannung an die Kondensatorringelektroden 29, 30 spaltfrei andrücken. Aufgrund der Anordnung der äußeren Vorspannzungen 39 im radialen Außenbereich der Dielektrikumträgerscheibe 19 ist sichergestellt, dass auch bei Verformungen der Ringscheibe 32 diese im für die sprunghafte Kapazitätserhöhung relevanten Bereich unter Vorspannung gesetzt wird.

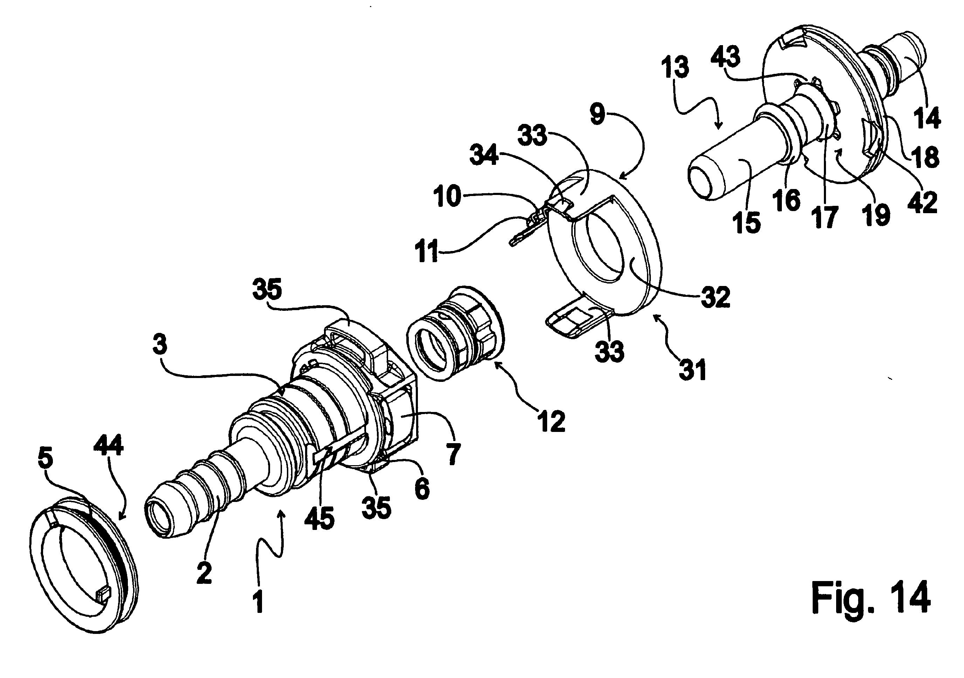

Fig. 14 zeigt in einer perspektivischen Explosionsansicht ein drittes Ausführungsbeispiel einer erfindungsgemäßen Kupplung von Fluidleitungen, wobei sich bei dem ersten Ausführungsbeispiel gemäß Fig. 1 bis Fig. 7, bei dem zweiten Ausführungsbeispiel gemäß Fig. 8 bis Fig. 13 und bei dem dritten Ausführungsbeispiel einander entsprechende Elemente mit den gleichen Bezugszeichen versehen und zum Vermeiden von Wiederholungen im Detail im weiteren nicht näher erläutert sind. Bei dem dritten Ausführungsbeispiel gemäß Fig. 14 verfügt die Dielektrikumträgerscheibe 19 anstatt der äußeren Vorspannzungen 39 des zweiten Ausführungsbeispieles über in Richtung der Gegenplatte 18 gewölbte und sich umfänglich über eine Ausnehmung erstreckende Spannbrücken 42, um die Vorspannung zu erzeugen. Weiterhin sind im Eingriffsbereich der Dielektrikumträgerscheibe 19 mit dem Haltebund 17 sich in radialer Richtung gerade erstreckende Hintergriffstege 43 ausgebildet. Dadurch lässt sich die Dielektrikumträgerscheibe 19 in einem verhältnismäßig großen Abstand von der Gegenplatte 18 anordnen, um auch einen verhältnismäßig großen Überweg des Einsteckteiles 13 zum Einnehmen der Schließstellung auszugleichen.

Weiterhin ist das dritte Ausführungsbeispiel gemäß Fig. 14 mit einem Spulenkörper 44 als separaten Bauelement zum Aufnehmen der Spule 5 ausgebildet, um die Herstellung der Spule 5 mit einer definierten Induktivität fertigungstechnisch möglichst einfach zu halten. Zum Positionieren des Spulenkörpers 44 auf dem Aufnahmeteil 1 ist eine sich in Längsrichtung des Aufnahmeteiles 1 erstreckende Spulenkörperführungsnut 45 vorhanden, die außenseitig in den Aufnahmeabschnitt 3 eingebracht ist.

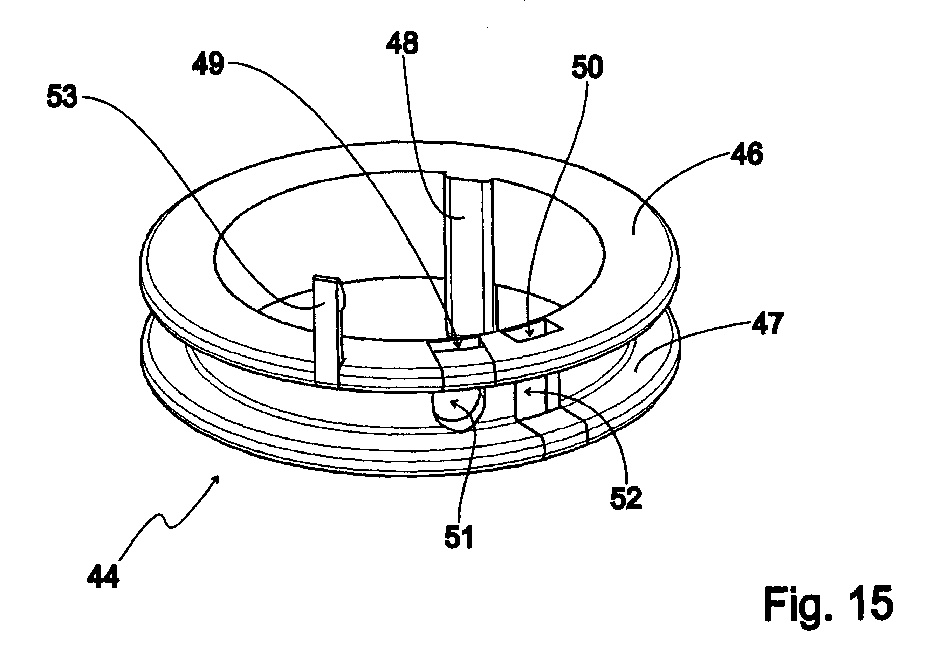

Fig. 15 zeigt den Spulenkörper 44 des dritten Ausführungsbeispieles gemäß Fig. 14. Aus Fig. 15 lässt sich erkennen, dass der ringförmig ausgebildete Spulenkörper 44 zwei Randscheiben 46, 47 aufweist, die einen zum Bewickeln mit der Spule 5 vorgesehenen Aufnahmeraum umschließen. Weiterhin ist auf der Innenseite des Spulenkörpers 44 ein sich in Längsrichtung der Mittelachse des Spulenkörpers 44 erstreckender Führungsvorsprung 48 ausgebildet, der komplementär zu der Spulenkörperführungsnut 45 ausgebildet ist, so dass der Spulenkörper 44 spielfrei auf den Aufnahmeabschnitt 3 des Aufnahmeteiles 1 aufschiebbar ist.

Zum Kontaktieren einer auf den Spulenkörper 44 aufgewickelten Spule 5 sind in dem Spulenkörper weiterhin Durchsteckausnehmungen 49, 50 vorhanden, die sich in Verlängerung der in den Haltefederaufnahmekörper 6 eingebrachten Leitungsausnehmungen 40, 41 erstrecken, und sich daran anschließende Aufnahmefreimachungen 51, 52 ausgebildet, in denen in zusammengefügter Anordnung die freien Enden der Anschlussleitungen 10, 11 angeordnet sind. Zum Verriegeln des Spulenkörpers 44 an dem Haltefederaufnahmekörper 6 des Aufnahmeteiles 1 ist eine Fixierzunge 53 mit einer radial nach innen weisenden Fixiernase vorhanden, die in eine zugeordnete, komplementär ausgebildete Fixiervertiefung in dem Haltefederaufnahmekörper 6 eingreift.

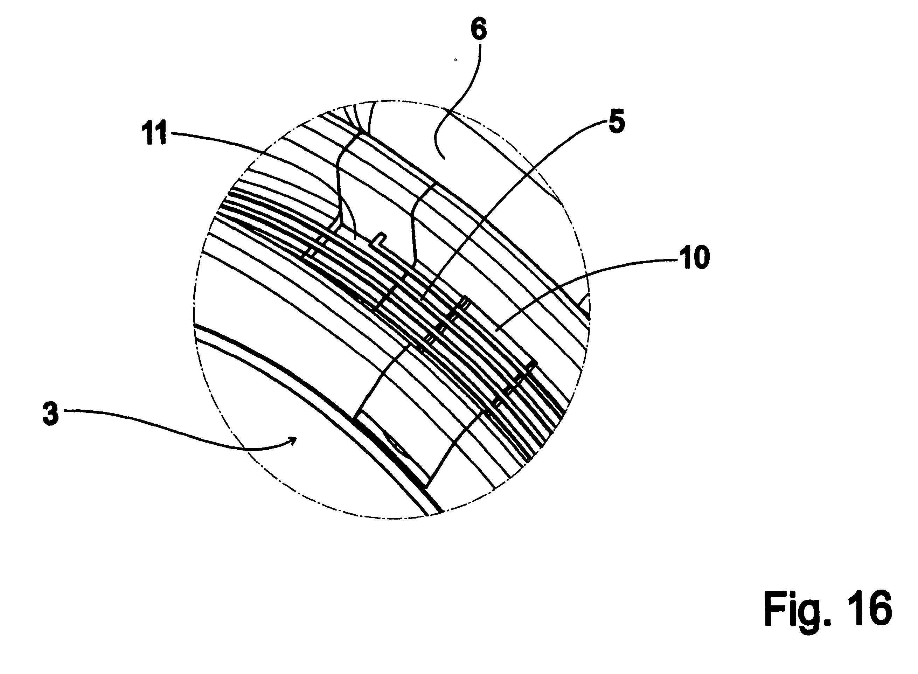

Fig. 16 zeigt in einer vergrößerten perspektivischen Teilansicht die Kontaktierung der in dem Spulenkörper 44 angeordneten Spule 5 mit den in zusammengefügter Anordnung der Kupplung gemäß dem dritten Ausführungsbeispiel in den Aufnahmefreimachungen 51, 52 liegenden freien Enden der Anschlussleitungen 10, 11.

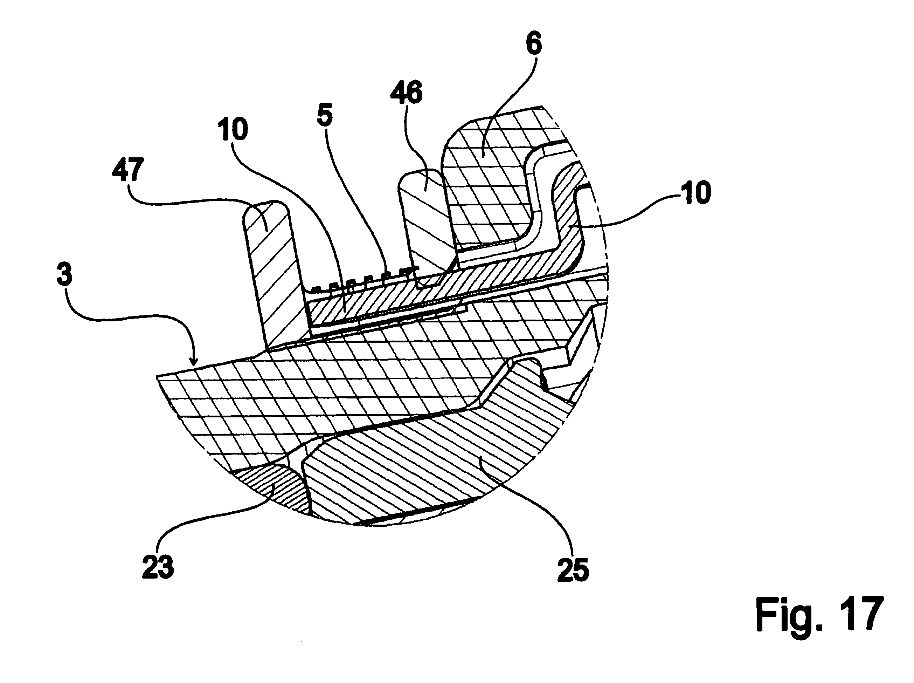

Fig. 17 zeigt in einer vergrößerten detaillierten Schnittansicht den mit einer gewissen Klemmwirkung auf den Aufnahmeabschnitt 3 des Aufnahmeteiles 1 aufgeschobenen Spulenkörper 44 mit der Kontaktierung der Spule 5 an dem freien Ende der Anschlussleitung 10, die im Endbereich, wie in Fig. 17 deutlich dargestellt ist, abgewinkelt ist. Auch bei dem dritten Ausführungsbeispiel ist die Spule 5 in radialer Richtung in einem verhältnismäßig großen Abstand von den freien Enden der Anschlussleitungen 10, 11 angeordnet, um einen Kurzschluss des Schwingkreises auszuschließen.

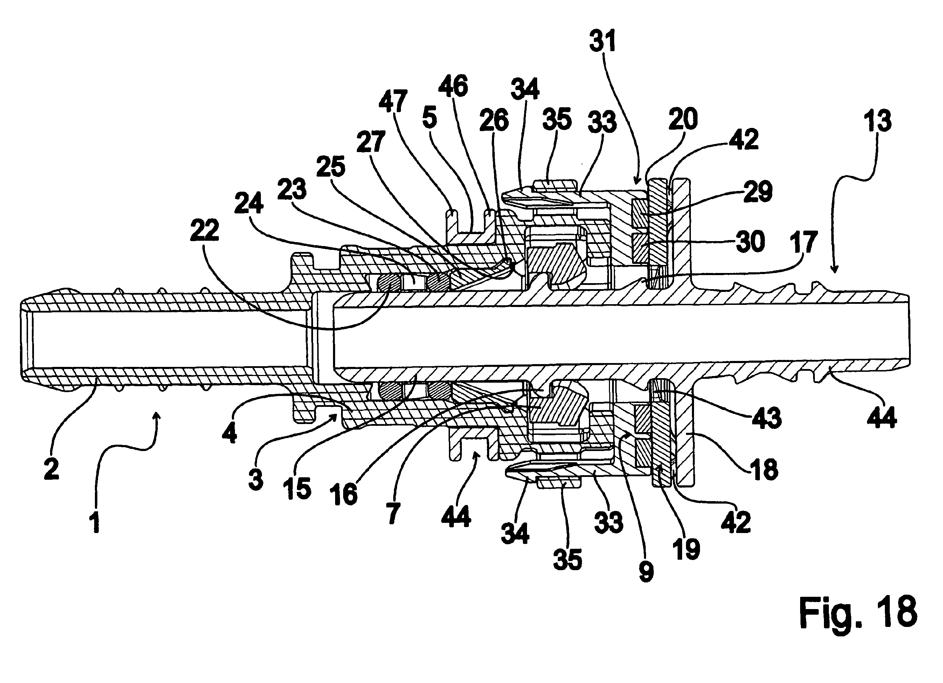

Fig. 18 zeigt in einem Längsschnitt das dritte Ausführungsbeispiel mit dem Einsteckteil 13 in der Schließstellung. Aus Fig. 18 ist ersichtlich, dass in der Schließstellung die Hintergriffstege 43 in einem Abstand von dem Rastbund 16 angeordnet sind, so dass sichergestellt ist, dass die durch die Spannbrücken 42 ausgeübten Vorspannkräfte vollständig auf die Kondensatorringelektroden 29, 30 einwirken.

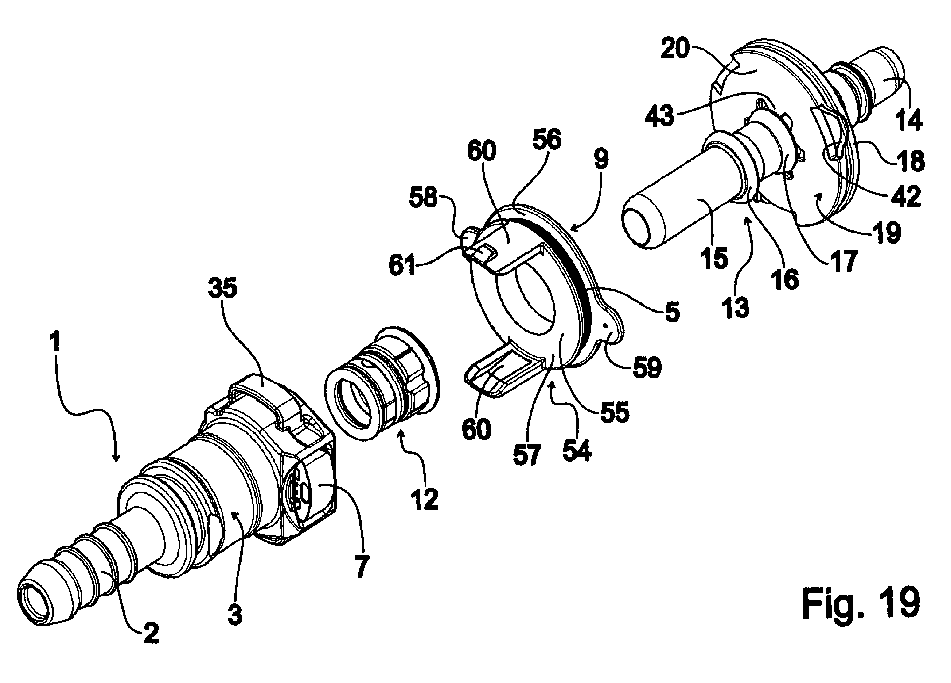

Fig. 19 zeigt in einer perspektivischen Explosionsansicht ein viertes Ausführungsbeispiel einer erfindungsgemäßen Kupplung für eine in Fig. 19 nicht dargestellte Fluidleitung, wobei sich bei dem ersten Ausführungsbeispiel gemäß Fig. 1 bis Fig. 7, bei dem zweiten Ausführungsbeispiel gemäß Fig. 8 bis Fig. 13, bei dem dritten Ausführungsbeispiel gemäß Fig. 14 bis Fig. 18 und bei dem vierten Ausführungsbeispiel einander entsprechende Elemente mit den gleichen Bezugszeichen versehen und im weiteren nicht näher erläutert sind. Das vierte Ausführungsbeispiel gemäß Fig. 19 verfügt über einen Schwingkreisträger 54, der eine mit einer mittigen Ausnehmung ausgebildete Ringscheibe 55 aufweist, die an ihrer radialen Außenseite mit einem stimseitigen Randbund 56 mit großem Durchmesser und mit einem rückseitigen Randbund 57 mit einem gegenüber dem Durchmesser des stimseitigen Randbundes 56 geringeren Durchmesser ausgebildet ist, die eine Aufnahmenut für eine Spule 5 eines elektrischen Schwingkreises umschließen.

An dem stimseitigen Randbund 56 sind einander diametral gegenüberliegende Kondensatoranschlussohren 58, 59 ausgebildet, die mittig eine kleine Ausnehmung zur Durchkontaktierung mit einem freien Ende der Spule 5 aufweisen. An der dem stimseitigen Randbund 56 gegenüberliegenden Seite ist der Schwingkreisträger 54 entsprechend dem zweiten Ausführungsbeispiel und dem dritten Ausführungsbeispiel mit Einschiebezungen 60 ausgebildet, die an ihren von der Ringscheibe 55 weg weisenden freien Enden jeweils mit einer Rastnase 61 zum Hintergreifen eines Haltebügels 35 ausgebildet sind.

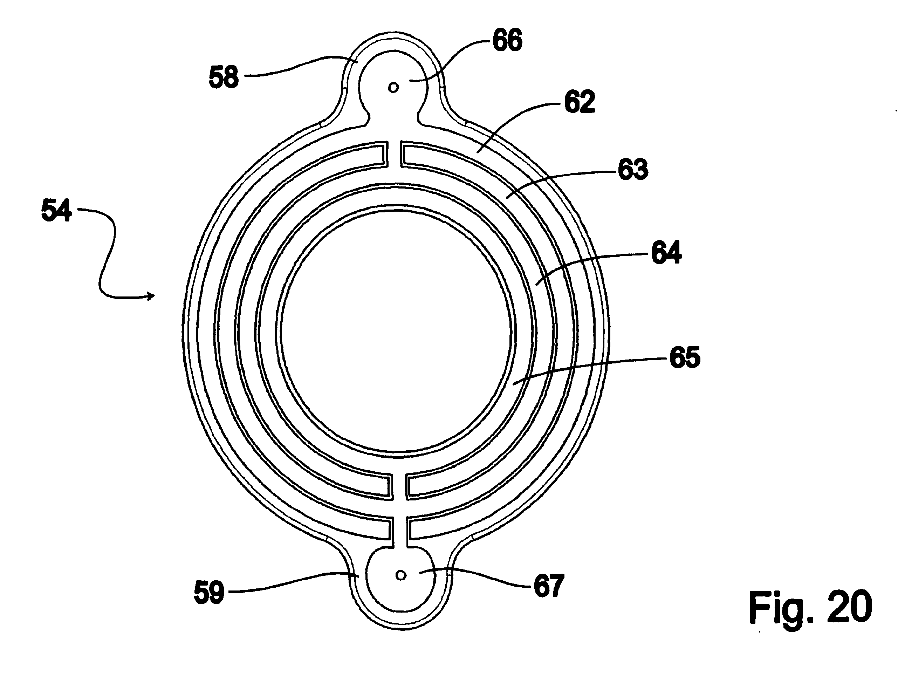

Fig. 20 zeigt den Schwingkreisträger 54 des dritten Ausführungsbeispiels gemäß Fig. 19 in einer Ansicht auf den stimseitigen Randbund 56. Aus Fig. 20 ist ersichtlich, dass ein Kondensator 9 des elektrischen Schwingkreises bei dem vierten Ausführungsbeispiel über zwei Paare von in einer Ebene ineinander liegenden Kondensatorringelektroden 62, 63, 64, 65 gebildet ist, wobei eine äußerste Kondensatorringelektrode 62 sowie eine mittlere äußere Kondensatorringelektrode 64 an einen ersten Anschlussbereich 66 und eine mittlere äußere Kondensatorringelektrode 63 und eine innerste Kondensatorringelektrode 65 an einen zweiten Anschlussbereich 67 zusammengeschaltet sind. Die Anschlussbereiche 66, 67 sind jeweils im Bereich eines Kondensatoranschlussohres 58, 59 ausgebildet. Durch das Ineinanderschachteln der Kondensatorringelektroden 62, 63, 64, 65 ist eine auf die Kapazitätsänderungen sehr empfindliche, entsprechend den vorangehende erläuterten Ausführungsbeispielen in Längsrichtung inhomogene elektrische Feldverteilung erzeugt.

Es versteht sich, dass bei Abwandlungen auch eine andere Anzahl von ineinander geschachtelten Kondensatorringelektroden ausgebildet sein kann, um eine bestimmte Kapazität bereitzustellen.

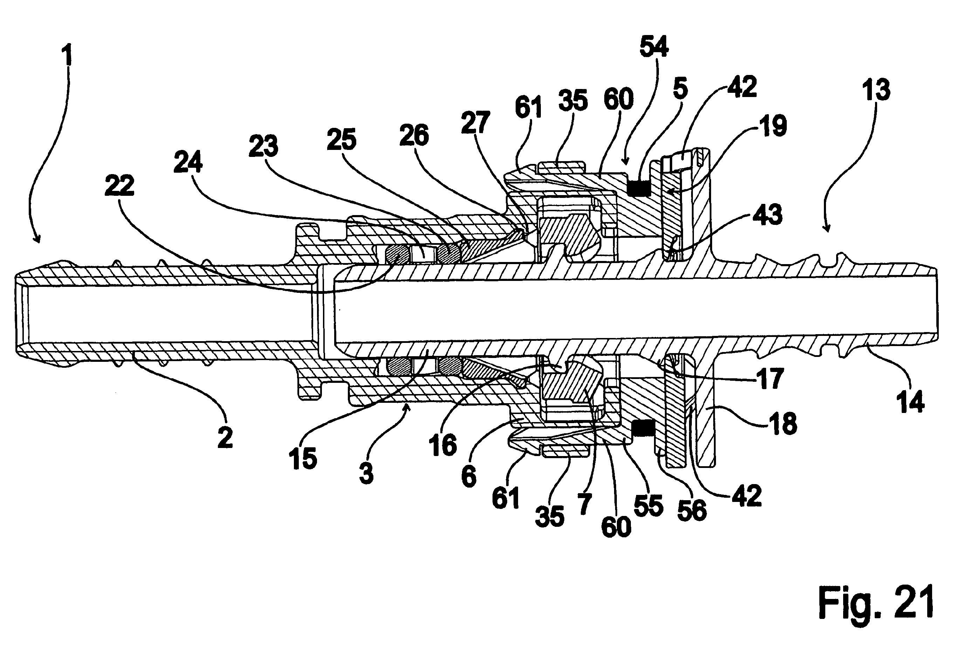

Fig. 21 zeigt in einem Längsschnitt die Kupplung gemäß dem vierten Ausführungsbeispiel gemäß Fig. 19 und Fig. 20 in zusammengefügter Anordnung mit dem Einsteckteil 13 in der Schließstellung, in der es mit dem Aufnahmeteil 1 verrastet ist. Aus Fig. 21 ist ersichtlich, dass sich durch die Integration der Spule 5 und des Kondensators 9 des elektrischen Schwingkreises in dem Schwingkreisträger 54 eine kompakte Bauform und insbesondere auch eine verhältnismäßig einfache Nachrüstbarkeit von Aufnahmeteilen 1 ergibt, beispielsweise wenn der elektrische Schwingkreis durch Leitungsdefekte nicht mehr ordnungsgemäß funktioniert.

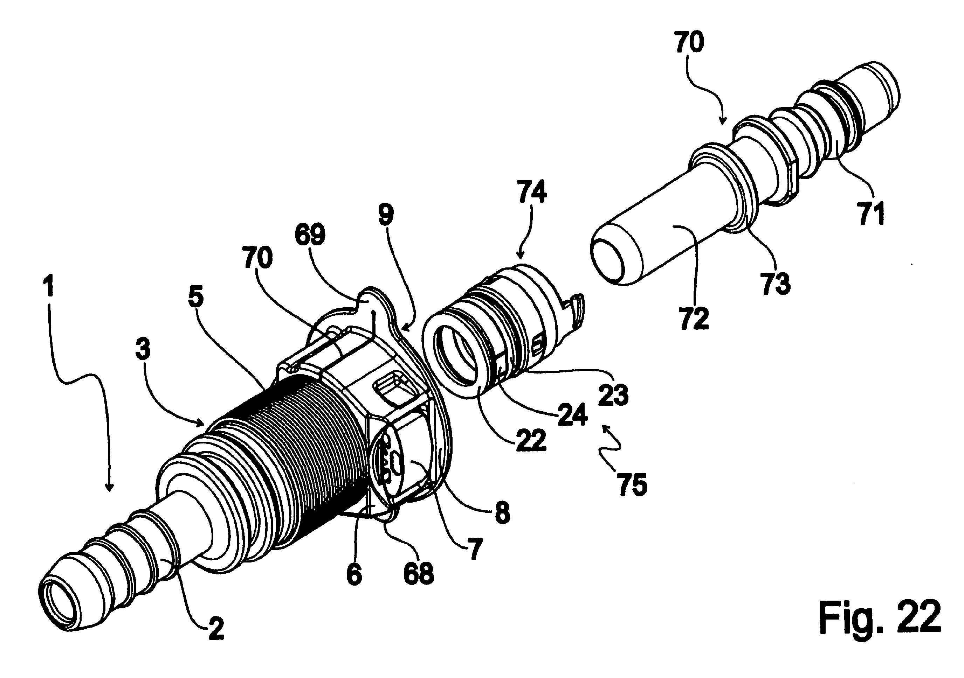

Fig. 22 zeigt in einer perspektivischen Explosionsansicht ein fünftes Ausführungsbeispiel einer erfindungsgemäßen Kupplung mit einer in Fig. 22 nicht dargestellten Fluidleitung, wobei sich bei dem ersten Ausführungsbeispiel gemäß Fig. 1 bis Fig. 7, dem zweiten Ausführungsbeispiel gemäß Fig. 8 bis Fig. 13, dem dritten Ausführungsbeispiel gemäß Fig. 14 bis Fig. 18, dem vierten Ausführungsbeispiel gemäß Fig. 19 bis Fig. 21 und dem fünften Ausführungsbeispiel einander entsprechende Elemente mit dem gleichen Bezugszeichen versehen und zum Vermeiden von Wiederholungen im weiteren nicht näher erläutert sind. Aus Fig. 22 ist ersichtlich, dass das Aufnahmeteil 1 des fünften Ausführungsbeispieles im Wesentlichen wie das Aufnahmeteil 1 des ersten Ausführungsbeispieles aufgebaut ist, wobei bei dem fünften Ausführungsbeispiel jedoch die Spule 5 mit einem relativ dicken Spulendraht gewickelt ist und die Wickelwand 4 im Wesentlichen vollständig belegt. An der Kondensatorträgerplatte 8 des fünften Ausführungsbeispieles sind Kondensatoranschlussohren 68, 69 ausgebildet, die diametral einander gegenüberliegend angeordnet sind und jeweils mit einem freien Ende 70, 71 der Spule 5 zum Ausbilden eines elektrischen Schwingkreises elektrisch verbunden sind.

Das Einsteckteil 70 der Kupplung gemäß dem fünften Ausführungsbeispiel weist abweichend von den Einsteckteilen 13 gemäß dem vorangehend erläuterten Ausführungsbeispielen als im Zusammenhang mit der Erfindung relevante Elemente lediglich einen Anschlussstutzen 71, einen dem Anschlussstutzen 71 gegenüberliegenden Einsteckschaft 72 sowie einen Rastbund 73 auf.

Das fünfte Ausführungsbeispiel verfügt als Element einer Abstimmeinrichtung über eine Permeabilitätsschalteinheit 74, die zusammen mit einer aus einem ersten Dichtungsring 22, aus einem zweiten Dichtungsring 23 sowie aus einem zwischen den Dichtungsringen 22, 23 angeordneten Zwischenring 24 aufgebauten Dichteinheit 75 in das Aufnahmeteil 1 einfügbar ist.

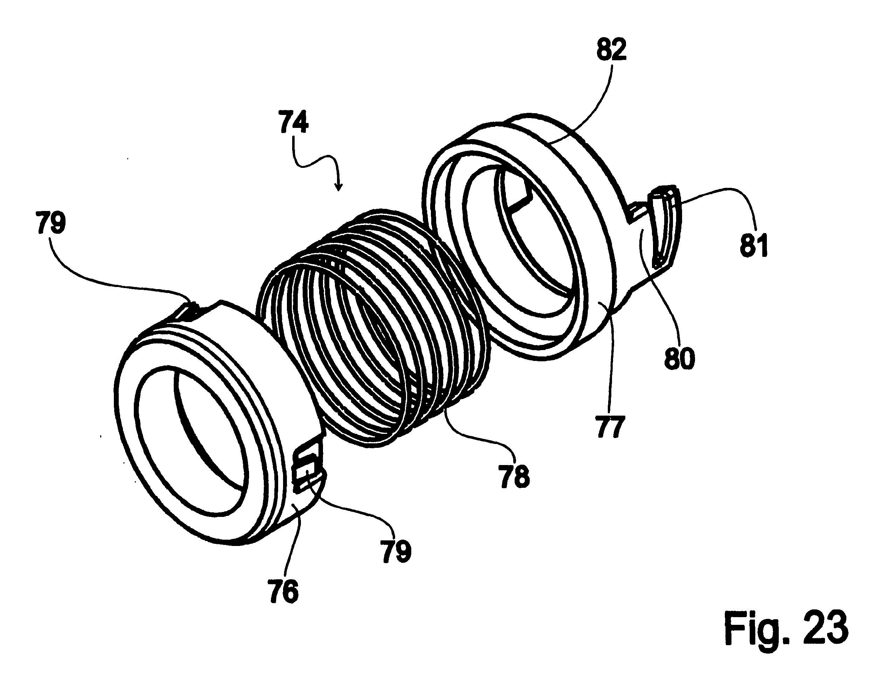

Fig. 23 zeigt in einer perspektivischen Explosionsansicht die Permeabilitätsschalteinheit 74 des fünften Ausführungsbeispieles gemäß Fig. 22. Die Permeabilitätsschalteinheit 74 weist ein dem zweiten Dichtungsring 23 zugewandtes ersten Spulenkemteil 76 und ein der Dichtungseinheit 75 abgewandtes zweites Spulenkernteil 77 auf, die jeweils aus einem Material mit einer hohen Permeabilitätszahl hergestellt sind. Jede Spulenkemeinheit 76, 77 weist zum Durchführen des Einsteckschaftes 72 eine mittige Ausnehmung auf und ist mit einem radial außenseitig ausgebildeten Aufnahmeraum ausgestattet, in dem die stirnseitigen Enden einer Druckfeder 78 angeordnet sind, die im Rahmen ihrer Federkraft die Spulenkemteile 76, 77 auseinander drückt.

Weiterhin lässt sich der Darstellung gemäß Fig. 23 entnehmen, dass an dem ersten Spulenkemteil 76 radial nach außen ausgestellte, von der Dichteinheit 75 weg weisende Rastzungen 79 ausgebildet sind, um das erste Spulenkernteil 76 zusammen mit den die Dichtungsringen 22, 23 sowie dem Zwischenring 24 nach Einfügen in dem Aufnahmeteil 1 zu fixieren.

Das zweite Spulenkernteil 77 verfügt über in Längsrichtung von dem ersten Spulenkernteil 76 wegweisend überstehende Mitnehmerzungen 80, an deren freien Enden als Gegendruckfeder jeweils eine in Umfangsrichtung erstreckende sowie in Längsrichtung angestellte Federzunge 81 ausgebildet ist. Die Federzungen 81 sind zusammen gegenüber der Druckfeder 78 härter. Weiterhin ist das zweite Spulenkernteil 77 mit einer sich rechtwinklig zur Längsrichtung erstreckenden Anschlagwand 82 versehen.

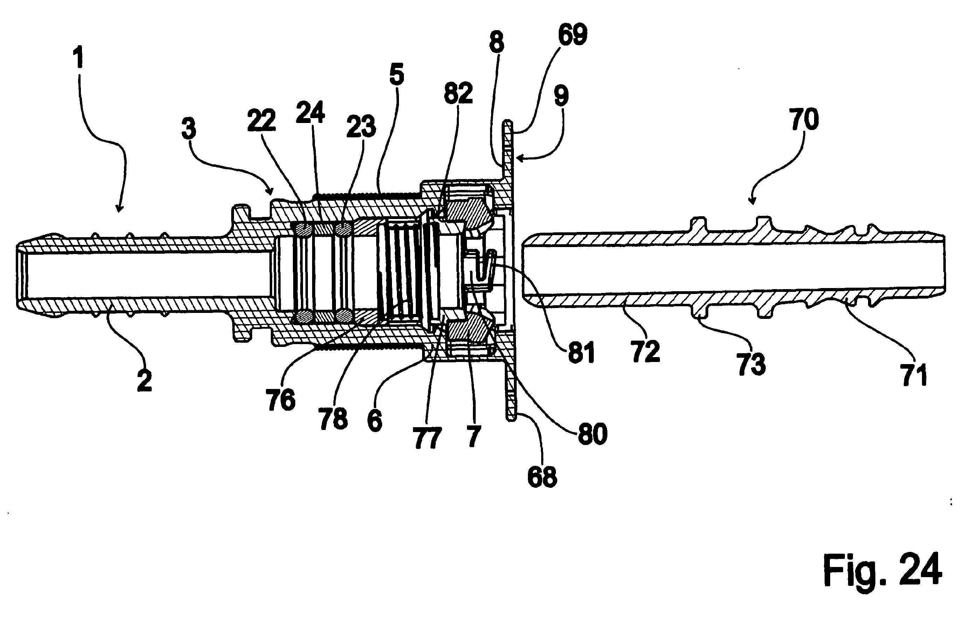

Fig. 24 zeigt in einem Längsschnitt das fünfte Ausführungsbeispiel gemäß Fig. 22 in einer Anordnung, in der das Einsteckteil 70 in einer Zwischenstellung, hier außerhalb des Aufnahmeteiles 1, angeordnet ist, wobei die Dichteinheit 75 und die Permeabilitätsschalteinheit 74 in dem Aufnahmeteil 1 angeordnet sind. Aus der Darstellung gemäß Fig. 24 ist ersichtlich, dass die Druckfeder 78 die Spulenkemteile 76, 77 in einem Abstand voneinander hält, wobei das zweite Spulenkernteil 77 mit der Anschlagwand 82 an der Haltefeder 7 anschlägt, so dass die Permeabilitätsschalteinheit 74 in dem Aufnahmeteil 1 verankert ist.

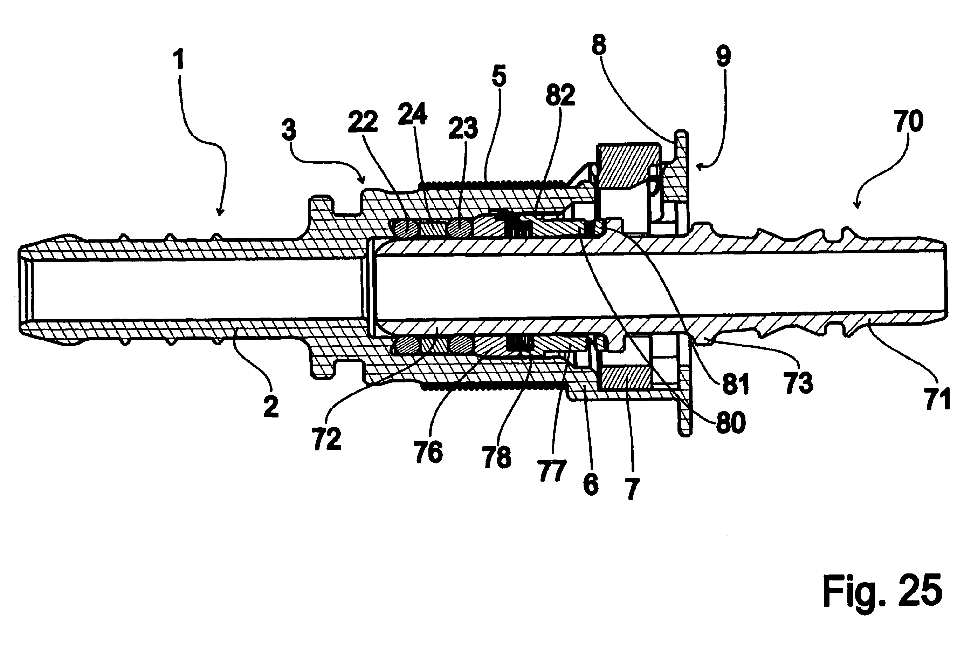

Fig. 25 zeigt in einem Längsschnitt das fünfte Ausführungsbeispiel gemäß Fig. 22 mit dem Einsteckteil 70 in der Schließstellung, in der die Hinterrastzungen 28 der Haltefeder 7 den Ringbund 73 hintergreifen. In dieser Anordnung liegen die in der Darstellung gemäß Fig. 25 nicht sichtbaren Federzungen 81 an dem Rastbund 73 an und drücken aufgrund ihrer gegenüber der Druckfeder 78 höheren Federkraft die Spulenkernteile 76, 77 spaltfrei aneinander. Dadurch sind die Permeabilität der Permeabilitätsschalteinheit 74 mit einem Schließpermeabilitätswert sowie in Folge die Induktivität der Spule 5 mit einem Schließkapazitätswert maximal, und die Resonanzfrequenz des elektrischen Schwingkreises ist auf die Schließkennfrequenz abgestimmt.

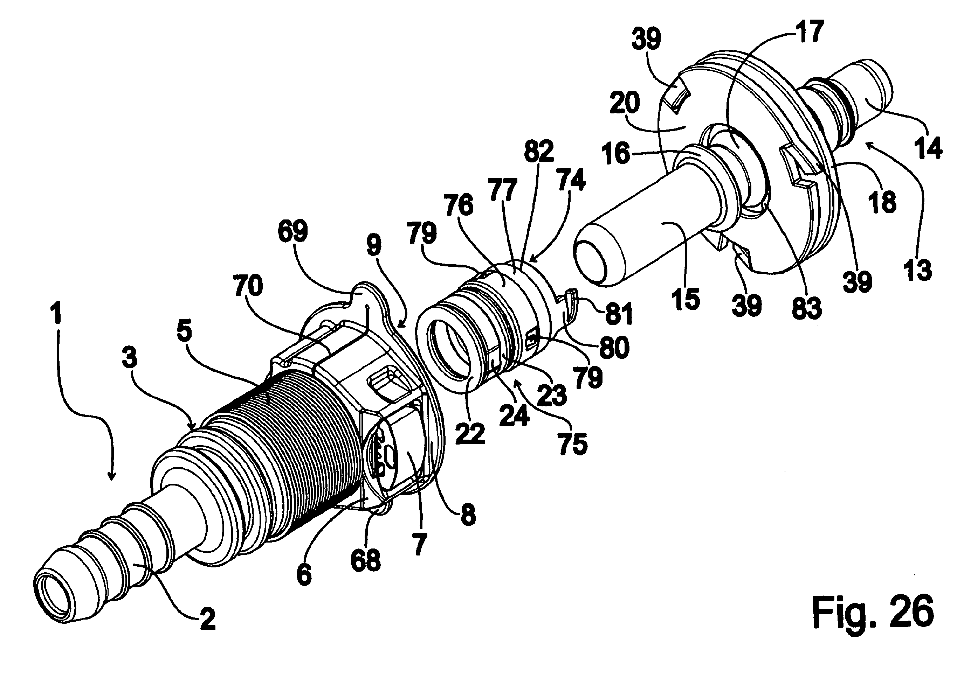

Fig. 26 zeigt in einer perspektivischen Explosionsansicht ein sechstes Ausführungsbeispiel einer erfindungsgemäßen Kupplung mit einer in Fig. 26 nicht dargestellten Fluidleitung, wobei sich bei dem ersten Ausführungsbeispiel gemäß Fig. 1 bis Fig. 7, dem zweiten Ausführungsbeispiel gemäß Fig. 8 bis Fig. 13, dem dritten Ausführungsbeispiel gemäß Fig. 14 bis Fig. 18, dem vierten Ausführungsbeispiel gemäß Fig. 19 bis Fig. 21, dem fünften Ausführungsbeispiel gemäß Fig. 22 bis Fig. 25 und dem sechsten Ausführungsbeispiel einander entsprechende Elemente mit dem gleichen Bezugszeichen versehen und zum Vermeiden von Wiederholungen im weiteren nicht näher erläutert sind. Das sechste Ausführungsbeispiel verfügt über ein Aufnahmeteil 1, über eine Spule 5, über einen Kondensator 9, über eine Permeabilitätsschalteinheit 74 und über eine Dichteinheit 75, die entsprechend dem fünften Ausführungsbeispiel aufgebaut sind.

Das Einsteckteil 13 ist bei dem sechsten Ausführungsbeispiel im wesentlichen wie das Einsteckteil 13 bei dem zweiten Ausführungsbeispiel mit einer Dielektrikumträgerscheibe 19 ausgeführt, wobei bei dem sechsten Ausführungsbeispiel jedoch innere kurze Vorspannzungen 83 vorhanden sind, die zwischen dem Haltebund 17 und dem Rastbund 16 angeordnet sowie in Richtung der Gegenplatte 18 weisend angestellt sind.

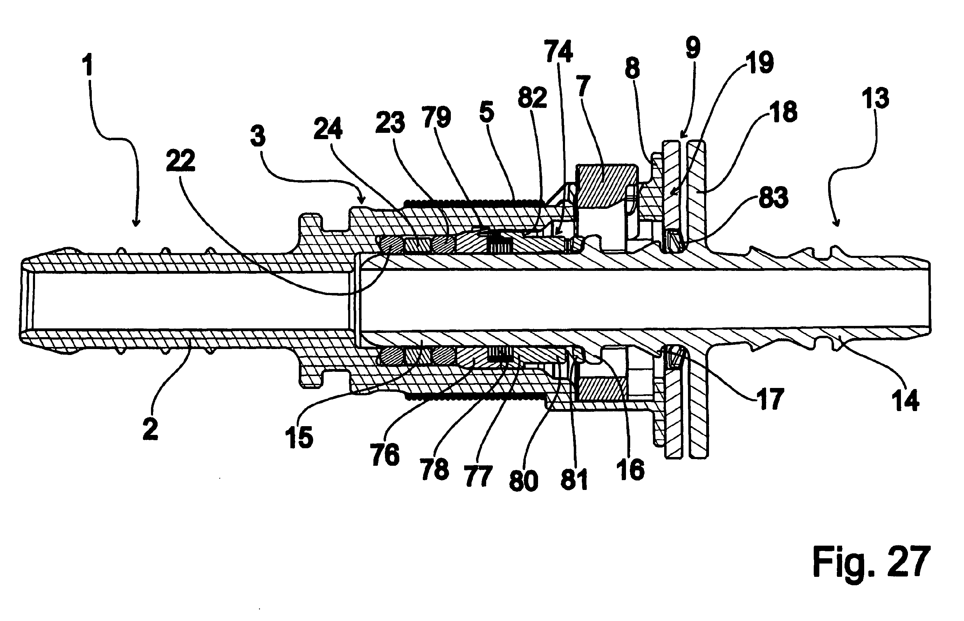

Fig. 27 zeigt das sechste Ausführungsbeispiel mit dem Einsteckteil 13 in der Schließstellung, in der der Rastbund 16 von den in der Darstellung gemäß Fig. 27 nicht sichtbaren Hinterrastzungen 28 hintergriffen wird und gegen die Federzungen 81 des zweiten Spulenkernteiles 77 drückt. Gleichzeitig liegt die Dielektrikumträgerscheibe 19 an der Kondensatorträgerplatte 8 an, so dass bei dem sechsten Ausführungsbeispiel in der Schließstellung die Induktivität der Spule 5 sowie die Kapazität des Kondensators 9 maximal sind. Dadurch ergibt sich gegenüber den Zwischenstellungen eine besonders markante, sprunghafte Änderung der Resonanzfrequenz des elektrischen Schwingkreises auf die Schließkennfrequenz.

Bei einem nicht dargestellten Ausführungsbeispiel ist ein Einsteckteil wenigstens mit einem Anschnitt aus einem Material mit einer hohen Permeabilität ausgebildet, so dass sich bei Einführen des Einsteckteiles in ein mit einer Induktivität und einer Kapazität zum Bereitstellen eines permanent geschlossenen Schwingkreises versehenen Aufnahmeteil die Resonanzfrequenz des Schwingkreises entsprechend den Prinzipien der vorangehend erläuterten Ausführungsbeispielen ändert.

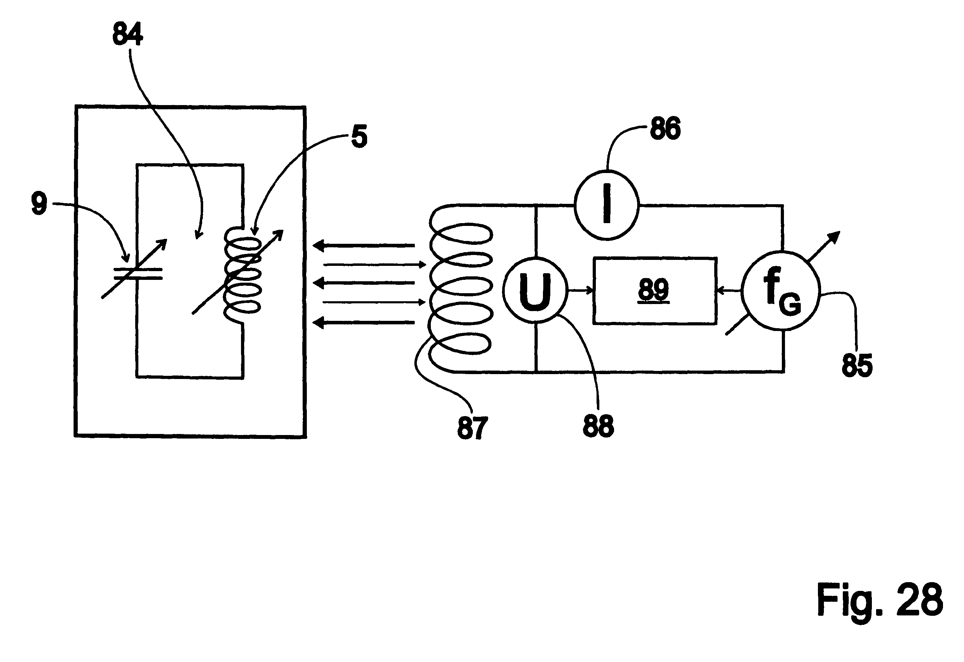

Fig. 28 zeigt in einem Blockschaubild eine Schaltungsanordnung zum Beaufschlagen einer erfindungsgemäßen Kupplung mit elektromagnetischer Energie in Gestalt eines Erregerfeldes sowie zum Detektieren der Dämpfung des Erregerfeldes durch den bei erfindungsgemäßen Kupplungen vorhandenen, permanent geschlossenen Schwingkreis 84, der aus der Spule 5 und dem Kondensator 9 mit einzeln oder in Kombination veränderlichen elektromagnetischen Eigenschaften zum Verändern der Resonanzfrequenz des Schwingkreises 84 gebildet ist. Die Schaltungsanordnung gemäß Fig. 28 verfügt über einen Frequenzgenerator 85 mit einer einstellbaren Anregungsfrequenz f_{G}, der über eine Strommesseinheit 86 parallel mit einer Messspule 87 geschaltet ist. Weiterhin ist eine Spannungsmesseinheit 88 parallel zu der Messspule 87 geschaltet. Ein für die Anregungsfrequenz f_{G} charakteristisches Ausgangssignal des Frequenzgenerators 85 sowie ein der gemessenen Spannung an der Messspule 87 charakteristisches Ausgangssignal der Spannungsmesseinheit 88 sind einer Auswerteeinheit 89 einspeisbar.

Bei Beaufschlagen der Messspule 87 mit einer Anregungsfrequenz f_{G} sendet diese, wie durch kräftige, von der Messspule 87 in Richtung der Spule 5 des Schwingkreises 84 weisende Pfeile angedeutet, ein elektromagnetisches Erregerfeld aus, das in die Spule 5 des Schwingkreises 84 einkoppelt und den Schwingkreis 84 selbst zu einer Schwingung angeregt. Liegt die Anregungsfrequenz f_{G} im Bereich einer Resonanzfrequenz des Schwingkreises 84, so ist über einen durch weniger kräftige, von der Spule 5 des Schwingkreises 84 in Richtung der Messspule 87 weisende Pfeile symbolisierten Rückkopplungseffekt in der Spannungsmesseinheit 88 aufgrund der Dämpfung des Erregerfeldes ein Spannungsabfall messbar. Liegt der Spannungsabfall bei einer für die Schließstellung der erfindungsgemäßen Kupplung charakteristischen Schließkennfrequenz, so ist berührungslos der geschlossene Zustand der betreffenden Kupplung festgestellt.

Soweit ist ohne weiteres erkennbar, dass bei Abstimmen der Schwingkreise 84 von mehreren efindungsgemäßen Kupplungen auf verschiedene Schließkennfrequenzen quasi simultan der Schließzustand dieser Kupplungen berührungslos detektierbar ist.

## Patentansprüche

1. Kupplung für eine Fluidleitung mit einem Einsteckteil (13, 70) und mit einem Aufnahmeteil (1), das zum Aufnehmen und Verriegeln des Einsteckteils (13, 70) in einer Schließstellung eingerichtet ist, wobei ein mit dem Aufnahmeteil (1) verbundener elektrischer Schwingkreis (5, 9; 84) vorhanden ist, der in der Schließstellung des Einsteckteils (13, 70) bei Beaufschlagen mit elektromagnetischer Energie zum Schwingen mit einer bestimmten, einer Schließkennfrequenz entsprechenden Resonanzfrequenz eingerichtet ist, **dadurch gekennzeichnet, dass** der Schwingkreis (5, 9; 84) permanent geschlossen ist und dass eine Abstimmeinrichtung (19, 74) vorhanden ist, die mit dem Schwingkreis (5, 9; 84) kontaktfrei und mit dem Einsteckteil (13, 70) mechanisch derart zusammenwirkt, dass der Schwingkreis (5, 9; 84) bei einer von der Schließstellung abweichenden Zwischenstellung des Einsteckteils (13, 70) eine von der Schließkennfrequenz abweichende Resonanzfrequenz und in der Schließstellung die Schließkennfrequenz aufweist.

2. Kupplung nach Anspruch 1, **dadurch gekennzeichnet, dass** die Abstimmeinrichtung (19) auf die Kapazität (9) des Schwingkreises (84) einwirkt.

3. Kupplung nach Anspruch 2, **dadurch gekennzeichnet, dass** der elektrische Schwingkreis (84) eine Kondensatorträgerplatte (8) aufweist, die an einer Stirnseite des Aufnahmeteils (1) angeordnet ist und die eine Einführöffnung zum Durchführen des Einsteckteiles (13, 70) umschließt.

4. Kupplung nach Anspruch 3, **dadurch gekennzeichnet, dass** die Kondensatorträgerplatte (8) eine Anzahl von konzentrisch ineinanderliegenden und in einer Ebene angeordnete Ringelektroden (29, 30, 62, 63, 64, 65) aufweist.

5. Kupplung nach Anspruch 4, **dadurch gekennzeichnet, dass** die Abstimmeinrichtung eine Dielektrikumträgerscheibe (19) aufweist, die an dem Einsteckteil (13) angebracht ist und die in der Schließstellung des Einsteckteils (13) an der Kondensatorträgerplatte (8) anliegt, so dass der Kondensator (9) in der Schließstellung des Einsteckteiles (13) einen Schließkapazitätswert und in Zwischenstellungen des Einsteckteiles (13) einen von dem Schließkapazitätswert verschiedenen Zwischenkapazitätswert aufweist.

6. Kupplung nach Anspruch 5, **dadurch gekennzeichnet, dass** an der Dielektrikumträgerscheibe (19) Vorspannmittel (21, 39, 42) ausgebildet sind, die in der Schließstellung des Einsteckteiles (13) die Dielektrikumträgerscheibe (19) mit einer Vorspannkraft gegen die Kondensatorträgerplatte (8) andrücken.

7. Kupplung nach einem der Ansprüche 1 bis 6, **dadurch gekennzeichnet, dass** die Abstimmeinrichtung (74) auf die Induktivität (5) des elektrischen Schwingkreises (84) einwirkt.

8. Kupplung nach einem Anspruch 7, **dadurch gekennzeichnet, dass** die Abstimmeinrichtung eine Permeabilitätsschalteinheit (74) aufweist, die mit dem Einsteckteil (13, 70) zusammenwirkt und in der Schließstellung des Einsteckteiles (13, 70) einen Schließpermeabilitätswert und in Zwischenstellungen des Einsteckteiles (13, 70) einen von dem Schließpermeabilitätswert verschiedenen Zwischenpermeabilitätswert aufweist.

9. Kupplung nach Anspruch 8, **dadurch gekennzeichnet, dass** die Permeabilitätsschalteinheit (74) zwei Spulenkernteile (76, 77) aufweist, die in der Schließstellung aneinander anliegen und zwischen denen in jeder Zwischenstellung ein Spalt ausgebildet ist.

10. Kupplung nach Anspruch 9, **dadurch gekennzeichnet, dass** zwischen den Spulenkemteilen (76, 77) eine Druckfeder (78) angeordnet ist.

11. Kupplung nach Anspruch 10, **dadurch gekennzeichnet, dass** eine Gegendruckfeder (81) vorhanden ist, die zwischen dem Einsteckteil (13, 70) und einem Spulenkernteil (76, 77) gegen den Druck der Druckfeder (78) derart wirkt, dass bei Anordnen des Einsteckteiles (13, 70) in der Schließstellung die Spulenkernteile (76, 77) spaltfrei aneinander anliegen.

## Claims

1. Coupling for a fluid line comprising an insertion part (13, 70) and a receptacle part (1) which is configured for receiving and locking the insertion part (13, 70) in a closed position, wherein connected to the receptacle part (1) is an electrical oscillating circuit (5, 9; 84) which, in the closed position of the insertion part (13, 70), is configured to oscillate at a particular resonant frequency corresponding to a characteristic closed frequency when electromagnetic energy is applied thereto, **characterised in that** the oscillating circuit (5, 9; 84) is permanently connected and that a tuning device (19, 74) is provided which cooperates contactlessly with the oscillating circuit (5, 9; 84) and cooperates mechanically with the insertion part (13, 70) such that the oscillating circuit (5, 9; 84) has, in an intermediate position of the insertion part (13, 70) which deviates from the closed position, a resonant frequency which deviates from the characteristic closed frequency and has the characteristic closed frequency in the closed position.

2. Coupling according to claim 1, **characterised in that** the tuning device (19) influences the capacitance (9) of the oscillating circuit (84).

3. Coupling according to claim 2, **characterised in that** the electrical oscillating circuit (84) has a capacitor carrier plate (8) which is arranged at a front side of the receptacle part (1) and surrounds an introduction aperture for passage of the insertion part (13, 70).

4. Coupling according to claim 3, **characterised in that** the capacitor carrier plate (8) has a number of concentrically nested circular electrodes (29, 30, 62, 63, 64, 65) arranged in one plane.

5. Coupling according to claim 4, **characterised in that** the tuning device comprises a dielectric carrier disk (19) which is mounted on the insertion part (13) and, in the closed position of the insertion part (13), lies against the capacitor carrier plate (8) so that, in the closed position of the insertion part (13), the capacitor (9) has a closed capacitance value and, in the intermediate positions of the insertion part (13), has an intermediate capacitance value which is different from the closed capacitance value.

6. Coupling according to claim 5, **characterised in that** provided at the dielectric carrier disk (19) are pre-tensioning means (21, 39, 42) which, in the closed position of the insertion part (13), press the dielectric carrier disk (19) with a pre-tensioning force against the capacitor carrier plate (8).

7. Coupling according to one of the claims 1 to 6, **characterised in that** the tuning device (74) influences the inductance (5) of the electrical oscillating circuit (84).

8. Coupling according to claim 7, **characterised in that** the tuning device has a permeability switching unit (74) which cooperates with the insertion part (13, 70) and, in the closed position of the insertion part (13, 70), has a closed permeability value and, in the intermediate position of the insertion part (13, 70), has an intermediate permeability value which is different from the closed permeability value.

9. Coupling according to claim 8, **characterised in that** the permeability switching unit (74) has two coil core parts (76, 77) which lie against one another in the closed position and between which, in each intermediate position, a gap is formed.

10. Coupling according to claim 9, **characterised in that** a pressure spring (78) is arranged between the coil core parts (76, 77).

11. Coupling according to claim 10, **characterised in that** a counterpressure spring (81) is provided which acts between the insertion part (13, 70) and a coil core part (76, 77) against the pressure of the pressure spring (78) such that when the insertion part (13, 70) is arranged in the closed position, the coil core parts (76, 77) lie against one another without any gap.

## Revendications

1. Raccord pour une conduite véhiculant un fluide, comprenant un élément d'emmanchement mâle (13, 70) et un élément femelle formant logement d'insertion (1), qui est agencé pour recevoir et verrouiller l'élément d'emmanchement mâle (13, 70) dans une position d'accouplement, dans lequel il est prévu un circuit électrique oscillant (5, 9 ; 84) raccordé à l'élément femelle (1) qui est agencé pour, dans la position d'accouplement de l'élément d'emmanchement mâle (13, 70), en réponse à l'application d'énergie électromagnétique, osciller avec une fréquence de résonance déterminée qui correspond à la fréquence d'identification de la position d'accouplement, **caractérisé en ce que** le circuit électrique oscillant (5, 9 ; 84) est fermé en permanence et **en ce qu'**il est prévu un dispositif d'accord (19, 74) qui opère en combinaison avec le circuit oscillant (5, 9 ; 84) sans contact et avec l'élément d'emmanchement mâle (13, 70) de manière mécanique de telle façon que le circuit oscillant (5,9 : 84) présente, lorsque l'élément d'emmanchement mâle (13, 70) se trouve dans une position intermédiaire différente de sa position d'accouplement, une fréquence de résonance qui est différente de celle correspondant à la position d'accouplement et lorsqu'il se trouve dans sa position d'accouplement la fréquence d'identification de la position d'accouplement.

2. Raccord selon la revendication 1, **caractérisé en ce que** le dispositif d'accord (19) exerce une action sur la capacité (9) du circuit oscillant (84).

3. Raccord selon la revendication 2, **caractérisé en ce que** le circuit électrique oscillant (84) comporte une platine porte-condensateurs (8) qui est disposée sur la face antérieure de l'élément femelle d'insertion (1) et qui enserre l'ouverture d'introduction de l'élément d'emmanchement mâle (13, 70).

4. Raccord selon la revendication 3, **caractérisé en ce que** la platine porte-condensateurs (8) comporte une pluralité d'électrodes annulaires (29, 30, 62, 63, 64, 65) respectivement insérées l'une dans l'autre de manière concentrique et disposées dans un même plan.

5. Raccord selon la revendication 4, **caractérisé en ce que** le dispositif d'accord est muni d'une rondelle porte-diélectrique (19) qui est montée sur l'élément d'emmanchement mâle (13) et qui, lorsque l'élément d'emmanchement mâle (13) se trouve dans sa position d'accouplement, est en contact d'application contre la platine porte-condensateurs (8) ce qui fait que le condensateur (9) présente, dans la position d'accouplement de l'élément d'emmanchement mâle (13), une valeur de capacité correspondant à son état accouplé et dans des positions intermédiaires de l'élément d'emmanchement mâle (13) une valeur de capacité correspondant à une position intermédiaire, qui est différente de la valeur de capacité correspondant à son état accouplé .

6. Raccord selon la revendication 5, **caractérisé en ce que** la rondelle porte-diélectrique (19) est munie de moyens de mise en état de précontrainte (21, 39, 42) qui, lorsque l'élément d'emmanchement mâle se trouve dans sa position d'accouplement, appliquent la rondelle porte-diélectrique (19), en exerçant une précontrainte au niveau de celle-ci, contre la platine porte-condensateurs (8).

7. Raccord selon l'une des revendications 1 à 6, **caractérisé en ce que** le dispositif d'accord (74) exerce une action sur l'inductance (5) du circuit électrique oscillant (84).

8. Raccord selon la revendication 7, **caractérisé en ce que** le dispositif d'accord comporte un module de commutation de perméabilité (74) qui opère en combinaison avec l'élément d'emmanchement mâle (13, 70) et qui présente, dans la position d'accouplement de l'élément d'emmanchement mâle (13, 70), une valeur de perméabilité correspondant à son état accouplé et dans des positions intermédiaires de l'élément d'emmanchement mâle (13, 70) une valeur de perméabilité correspondant à une position intermédiaire qui est différente de la valeur de perméabilité correspondant à son état accouplé.

9. Raccord selon la revendication 8, **caractérisé en ce que** le module de commutation de perméabilité (74) comporte deux noyaux (76, 77) qui, dans la position d'accouplement sont en contact d'application l'un contre l'autre et qui, dans une position intermédiaire quelconque, sont séparés par un intervalle d'écartement.

10. Raccord selon la revendication 9, **caractérisé en ce qu'**un ressort de compression est disposé entre les noyaux de bobine (76, 77).

11. Raccord selon la revendication 10, **caractérisé en ce qu'**il est prévu un ressort de compression antagoniste (81) qui exerce, entre l'élément d'emmanchement mâle (13, 70) et un noyau de bobine (76, 77), une action venant contrer la pression exercée par le ressort de compression (78), dans des conditions telles que, lorsque l'élément d'emmanchement mâle (13, 70) se trouve dans sa position d'accouplement, les noyaux de bobine (76, 77) sont en contact d'application l'un contre l'autre sans intervalle d'écartement.
